(19) Europäisches Patentamt
European Patent Office
Office européen des brevets

(11) **EP 4 607 470 A1**

(12) **EUROPEAN PATENT APPLICATION**

(43) Date of publication:
27.08.2025 Bulletin 2025/35

(51) International Patent Classification (IPC):
***G06T 19/00*** (2011.01)

(21) Application number: 25155685.8

(22) Date of filing: 04.02.2025

(52) Cooperative Patent Classification (CPC):
**G06T 19/00;** G06T 2219/004; G06T 2219/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 22.02.2024 JP 2024025937
22.02.2024 JP 2024025936
06.12.2024 JP 2024213264
06.12.2024 JP 2024213299

(71) Applicant: **Ricoh Company, Ltd.**
**Tokyo 143-8555 (JP)**

(72) Inventors:
• **MOTOHASHI, Naoki**
**Tokyo, 143-8555 (JP)**
• **MORITA, Kenichiro**
**Tokyo, 143-8555 (JP)**
• **MATSUNO, Yoichiro**
**Tokyo, 143-8555 (JP)**
• **OGATA, Koretaka**
**Tokyo, 143-8555 (JP)**
• **INAGAKI, Shiho**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **INFORMATION PROCESSING APPARATUS, INFORMATION PROCESSING SYSTEM, SCREEN GENERATION METHOD, AND CARRIER MEANS**

(57)    An information processing apparatus (5) includes a generation unit (53) to generate a screen including a first captured image display area displaying a first predetermined-area image, a second captured image display area displaying a second predetermined-area image, and a three-dimensional image display area. The first predetermined-area image is a first predetermined area of a first captured image, which is obtained by capturing an object with an image capturing device (10) at a first image capturing position. The three-dimensional image display area displays at least a part of a three-dimensional image aligned with the first captured image, the three-dimensional image including a position image indicating a second image capturing position of the image capturing device at a specific date and time of image capturing. The second predetermined-area image is a second predetermined area of a second captured image, which is obtained by capturing the object with the image capturing device (10) at the specific date and time of image capturing that is associated with the second image capturing position indicated by the position image.

**FIG. 35**

EP 4 607 470 A1

**Description**

BACKGROUND

Technical Field

The present disclosure relates to an information processing apparatus, an information processing system, a screen generation method, and a carrier means.

Related Art

The image having a wide field of view (referred to as a "wide-field image") includes, as an imaging range, an area not covered with the regular field of view. Examples of the wide-field image include a 360-degree image that has captured the entire surrounding area. The 360-degree image may be referred to as a spherical image, omnidirectional image, or all-round image.

When the entire wide-field image is displayed on a display terminal, the wide-field image is curved, and a user has difficulty viewing the displayed wide-field image. To cope with this, the display terminal displays a predetermined area of the wide-field image, as a predetermined-area image having a field of view that is narrower, so that the user can view the predetermined-area image (See Japanese Unexamined Patent Application Publication No. 2023-140923).

However, by viewing the predetermined-area image corresponding to a viewable range of the wide-field image, the user can hardly recognize what is captured in the predetermined-area image or where the predetermined-area image is captured.

Further, an image capturing device captures a 360-degree view of objects around an image capturing position in a single imaging process. In other words, the image capturing device does not capture the objects from all 360-degree directions relative to the object. Even if the object is within the imaging range, the back of the object can fail to be captured and the user is not able to check the state of the back of the object.

SUMMARY

The present disclosure described herein provides an information processing apparatus including a generation unit to generate a screen including a first captured image display area displaying a first predetermined-area image, a second captured image display area displaying a second predetermined-area image, and a three-dimensional image display area. The first predetermined-area image is a first predetermined area of a first captured image, which is obtained by capturing an object with an image capturing device at a first image capturing position. The three-dimensional image display area displays at least a part of a three-dimensional image aligned with the first captured image, the three-dimensional image including a position image indicating a second image capturing position of the image capturing device at a specific date and time of image capturing. The second predetermined-area image is a second predetermined area of a second captured image, which is obtained by capturing the object with the image capturing device at the specific date and time of image capturing that is associated with the second image capturing position indicated by the position image.

The present disclosure described herein provides an information processing system including an information processing apparatus that includes a generation unit to generate a screen including a first captured image display area and a three-dimensional image display area, and a reception unit. The information processing apparatus further includes a display terminal communicably connected with the information processing apparatus and including a display control unit to display the screen on a display. The first captured image display area displays a first predetermined-area image being a first predetermined area of a first captured image, which is obtained by capturing an object with an image capturing device at a first image capturing position. The three-dimensional image display area displays at least a part of a three-dimensional image aligned with the first captured image, the three-dimensional image including a position image indicating a second image capturing position of the image capturing device at a specific date and time of image capturing. In response to receiving a selection of the position image at the reception unit, the generation unit causes the screen to additionally include a second captured image display area including a second predetermined-area image being a second predetermined area of a second captured image, which is obtained by capturing the object with the image capturing device at the specific date and time of image capturing that is associated with the second image capturing position indicated by the selected position image.

The present disclosure described herein provides a screen generating method including: generating a screen including a first captured image display area and a three-dimensional image display area. The first captured image display area displays a first predetermined-area image being a first predetermined area of a first captured image, the first captured image being obtained by capturing an object with an image capturing device at a first image capturing position. The three-dimensional image display area displays at least a part of a three-dimensional image aligned with the first captured image, the three-dimensional image including a position image indicating a second image capturing position of the image capturing device at a specific date and time of image capturing. The method further includes receiving selection of the position image, and generating the screen to additionally include a second captured image display area including a second predetermined-area image being a second predetermined area of a second captured image, which is obtained by capturing the object with the image capturing device at the specific date and time of image capturing that is associated with the second image capturing position indicated by the selected position image.

The present disclosure described herein provides a carrier means carrying computer-readable codes for controlling a computer system to carry out the above-described method.

With generation of an image that complements a captured image obtained by image capturing, user convenience is enhanced.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIGs. 1A, 1B, and 1C are a left side view, a front view, and a plan view of an image capturing device;

FIG. 2 is a diagram illustrating how the image capturing device of FIGs. 1A to 1C is used;

FIGs. 3A, 3B, and 3C (FIG. 3) are diagrams illustrating a front side of a hemispherical image, a back side of the hemispherical image, and an image in equirectangular projection, respectively, captured by the image capturing device of FIGs. 1A to 1C;

FIG. 4A is a diagram illustrating an image in equirectangular projection covering a surface of a sphere;

FIG. 4B is a diagram illustrating a spherical image;

FIG. 5 is a diagram illustrating positions of a virtual camera and a predetermined area in a case where the spherical image is of a three-dimensional sphere;

FIG. 6A is a perspective view of the virtual camera and the predetermined area illustrated in FIG. 5;

FIG. 6B is a diagram illustrating a predetermined-area image obtained in the state illustrated in FIG. 6A and displayed on a display;

FIG. 6C is a view of a predetermined area obtained by changing the viewpoint of the virtual camera illustrated in FIG. 6A;

FIG. 6D is a diagram illustrating a predetermined-area image obtained in the state illustrated in FIG. 6C and displayed on the display;

FIG. 7 is a diagram illustrating a point in a three-dimensional Euclidean space defined in spherical coordinates;

FIG. 8 is a conceptual diagram illustrating a relationship between the predetermined area and a point of interest;

FIG. 9 is a schematic diagram illustrating a configuration of a communication system;

FIG. 10 is a block diagram illustrating a hardware configuration of the image capturing device of FIG. 9;

FIG. 11 is a block diagram illustrating a hardware configuration of a relay device of FIG. 9;

FIG. 12 is a block diagram illustrating a hardware configuration of any one of a communication control apparatus and a communication terminal illustrated in FIG. 9;

FIG. 13 is a block diagram illustrating a functional configuration of the communication system of FIG. 9;

FIG. 14 is a schematic diagram of a user and device management table;

FIG. 15 is a schematic diagram of a virtual room management table;

FIG. 16 is a schematic diagram of a three-dimensional image management table;

FIG. 17 is a schematic diagram of another three-dimensional image management table;

FIG. 18 is a schematic diagram of a movement history management table;

FIG. 19 is a sequence diagram illustrating a process of communicating content data performed by the communication system of FIG. 9;

FIG. 20 is a sequence diagram illustrating a process of starting image recording and sound recording, performed by the communication system of FIG. 9;

FIG. 21 is a sequence diagram illustrating a process of stopping image recording and sound recording, performed by the communication system of FIG. 9;

FIG. 22 is a sequence diagram illustrating a process of playing back a recorded image and recorded sound, performed by the communication system of FIG. 9;

FIG. 23 is a diagram illustrating a recorded data selection screen;

FIG. 24 is a flowchart of a part of a screen display process performed by the communication control apparatus of FIG. 9;

FIG. 25 is a flowchart of another part of the screen display process performed by the communication control apparatus of FIG. 9;

FIG. 26 is a diagram illustrating an example of an initial display screen displayed on the communication terminal of FIG. 9;

FIG. 27 is a diagram illustrating a screen in which a corresponding predetermined area, an icon of a virtual camera, and a line of sight of the virtual camera are displayed in a display area;

FIG. 28 is a diagram of a screen displayed at the communication terminal of FIG. 9, when the change occurs in the image capturing target object, which is displayed at the same image capturing position with the same angle of view;

FIG. 29 is another diagram illustrating a screen displayed at the communication terminal of FIG. 9, which includes the icon of the virtual camera, the corresponding predetermined area, and the line indicating the line of sight, each being superimposed on the display area;

FIG. 30 is a diagram illustrating a screen including the movement path of the virtual camera, which is represented by the icons each indicating a particular position and an angle of view of the image capturing device at the registered date and time of image capturing, the latest corresponding display area, and the line indicating the latest line of sight;

FIG. 31 is a diagram illustrating a screen displayed at the communication terminal of FIG. 9 when reproducing the predetermined-area images having been recorded;

FIG. 32 is a flowchart of a part of a screen display process, performed by the communication control apparatus of FIG. 9 after registering the dates and times of image capturing;

FIG. 33 is a flowchart of another part of the screen display process, performed by the communication control apparatus of FIG. 9 after registering the dates and times of image capturing;

FIG. 34 is a diagram illustrating a screen for displaying the current predetermined-area image at the communication terminal of FIG. 9, after registering the dates and times of image capturing; and

FIG. 35 is a diagram illustrating a screen for additionally displaying the past predetermined-area image at the communication terminal of FIG. 9, after registering the dates and times of image capturing.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Overview of Spherical Image

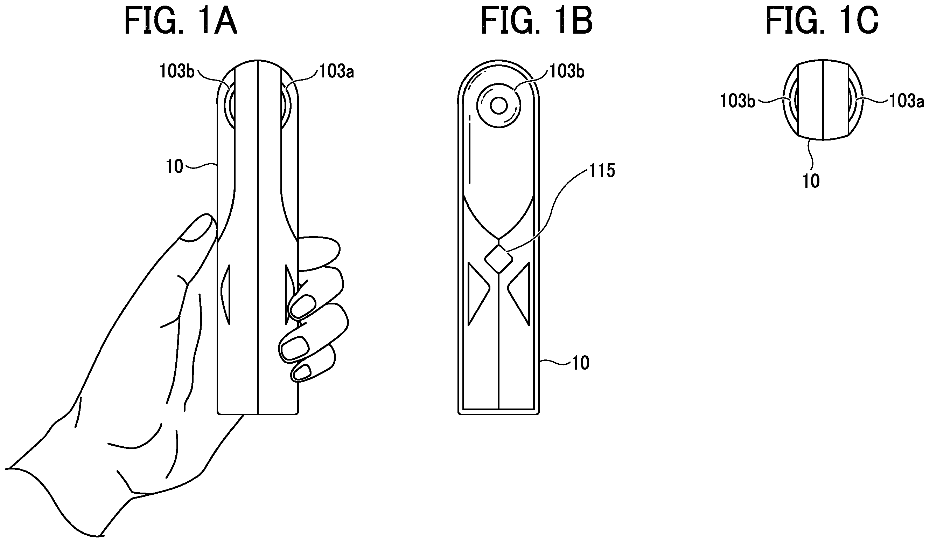

A method for generating a spherical image is described with reference to FIGs. 1 (1A to 1C) to 8. The spherical image is also referred to as a spherical panoramic image or a 360-degree panoramic image. The spherical image is an example of a wide-field video (wide-field moving image) having a wide field of view. Examples of the wide-field image include a panoramic image of about 180 degrees.

An external view of an image capturing device 10 is described with reference to FIG. 1 (FIGs. 1A to 1C). The image capturing device 10 is a digital camera that acquires one or more captured images from which the spherical image is generated. FIG. 1A, FIG. 1B, and FIG. 1C are a left side view, a front view, and a plan view, respectively, of the image capturing device 10.

As illustrated in FIG. 1A, the image capturing device 10 has a size such that a person can hold the image capturing device 10 with one hand. As illustrated in FIGs. 1A, 1B, and 1C, the image capturing device 10 includes an imaging element 103a and an imaging element 103b in an upper portion thereof. Specifically, the imaging element 103a is disposed on the front side, and the imaging element 103b is disposed on the back side. As illustrated in FIG. 1B, the image capturing device 10 further includes an operation unit 115 including a shutter button on the back side of the image capturing device 10.

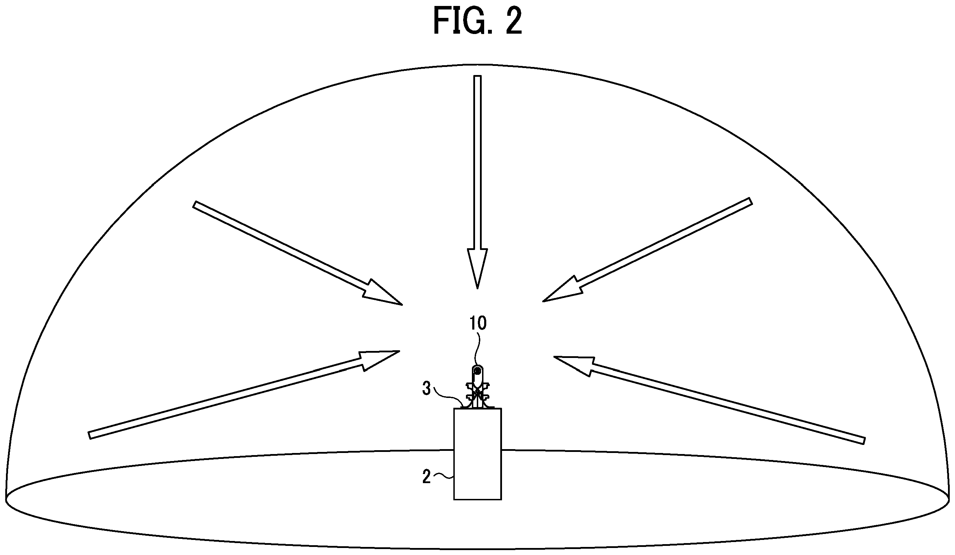

The usage scenario of the image capturing device 10 is described below with reference to FIG. 2. FIG. 2 is an illustration of an example of how a user uses the image capturing device 10. As illustrated in FIG. 2, the image capturing device 10 is communicably connected to a relay device 3 placed on a table 2 and is used to capture images of surrounding objects and the scenery. The imaging elements 103a and 103b illustrated in FIGs. 1A to 1C capture the surrounding objects surrounding the user to obtain two hemispherical images. If the image capturing device 10 does not transmit the spherical image, which is generated from the captured hemispherical images, to another communication terminal or system, the relay device 3 is not needed.

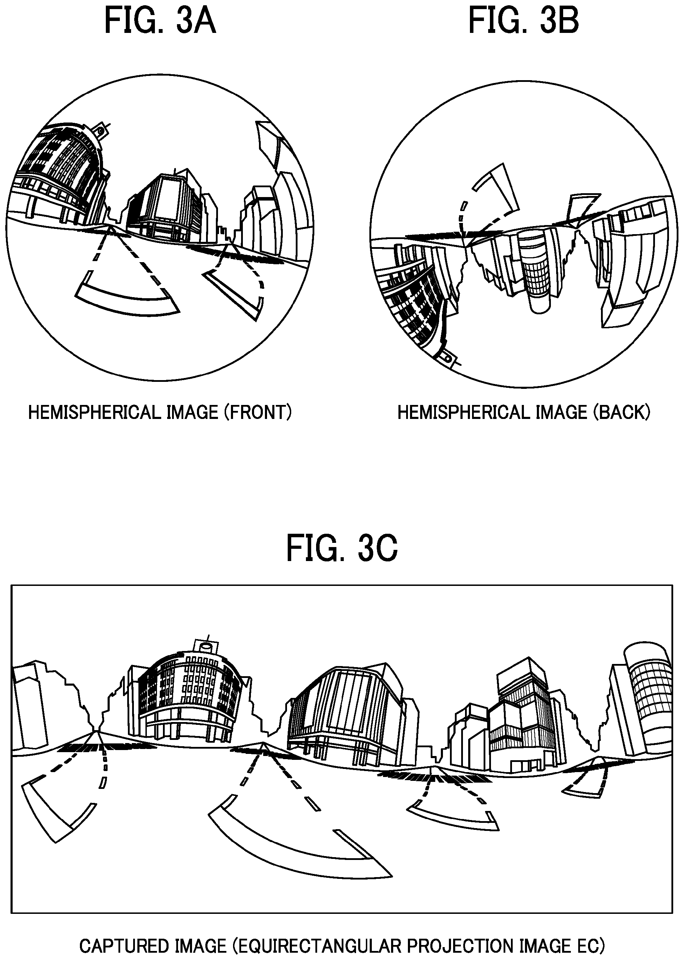

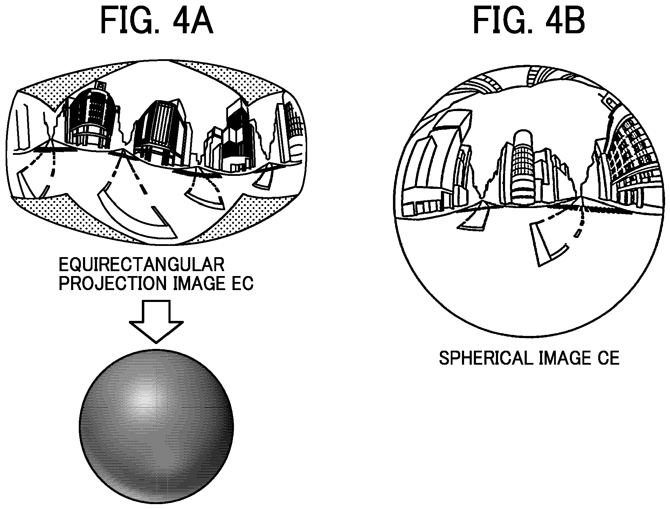

An overview of a process of generating the spherical image from the images captured by the image capturing device 10 is described below with reference to FIG. 3 (FIG. 3A to FIG. 3C) and FIG. 4 (FIG. 4A and FIG. 4B). FIG. 3A is a diagram illustrating a hemispherical image (front side) captured by the image capturing device 10. FIG. 3B is a diagram illustrating a hemispherical image (back side) captured by the image capturing device 10. FIG. 3C is a diagram illustrating an image in equirectangular projection. The image in equirectangular projection may be referred to as an "equirectangular projection image". In alternative to the equirectangular projection image, an image in Mercator projection may be used. The image in Mercator projection may be referred to as a "Mercator image". FIG. 4A conceptually illustrates an example of how the equirectangular projection image is mapped to a sphere. FIG. 4B illustrates an example of the spherical image. The "equirectangular projection image" is the spherical image in an equirectangular format and is an example of the wide-field image described above.

As illustrated in FIG. 3A, an image obtained by the imaging element 103a is a curved hemispherical image (front side) captured through a wide-angle lens 102a such as a fisheye lens described below. As illustrated in FIG. 3B, an image obtained by the imaging element 103b is a curved hemispherical image (back side) captured through a wide-angle lens 102b such as a fisheye lens described below. The image capturing device 10 combines the hemispherical image (front side) and the hemispherical image (back side) inverted by 180 degrees to create an equirectangular projection image EC as illustrated in FIG. 3C.

The image capturing device 10 uses software such as Open Graphics Library for Embedded Systems (OpenGL ES) to map the equirectangular projection image EC to the sphere so as to cover the surface of the sphere in a manner illustrated in FIG. 4A to generate the spherical image CE as illustrated in FIG. 4B. The spherical image CE is represented as the equirectangular projection image EC, which corresponds to a surface facing the center of the sphere. The OpenGL ES is a graphic library used for visualizing two-dimensional (2D) data and three-dimensional (3D) data. The OpenGL ES is an example of software that executes image processing. Software other than Open ES may be used to generate the spherical image CE. The spherical image CE is either a still image or a moving image. Although the image capturing device 10 generates the spherical image in the above description, another device, such as a communication control apparatus 5, a communication terminal 7, or a communication terminal 9, may perform substantially the same image processing or a part of the image processing instead of the image capturing device 10.

The equirectangular projection image EC is mapped to cover the sphere surface using the OpenGL ES as illustrated in FIG. 4A to generate the spherical image CE as illustrated in FIG. 4B.

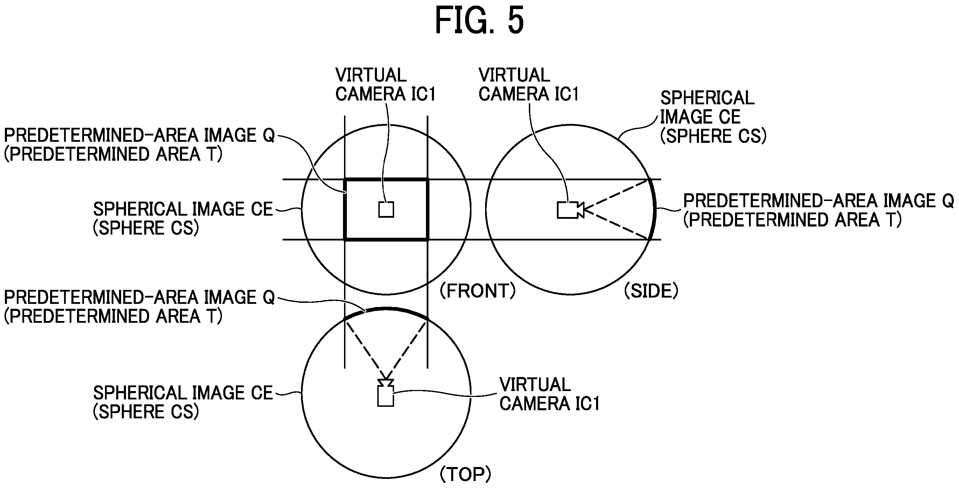

As described above, since the spherical image CE is an image mapped to the sphere surface to cover the sphere surface, a part of the image may look distorted when viewed from the user, giving a feeling of strangeness. To cope with this, each of the communication terminals 7 and 9 displays an image of a predetermined area, which is a part of the spherical image, as a planar image having fewer curves, allowing display without giving a feeling of strangeness to the user. The image of the predetermined area, which is viewable to the user, may be referred to as a predetermined-area image in the following description. The display of the predetermined-area image is described with reference to FIGs. 5 to 8.

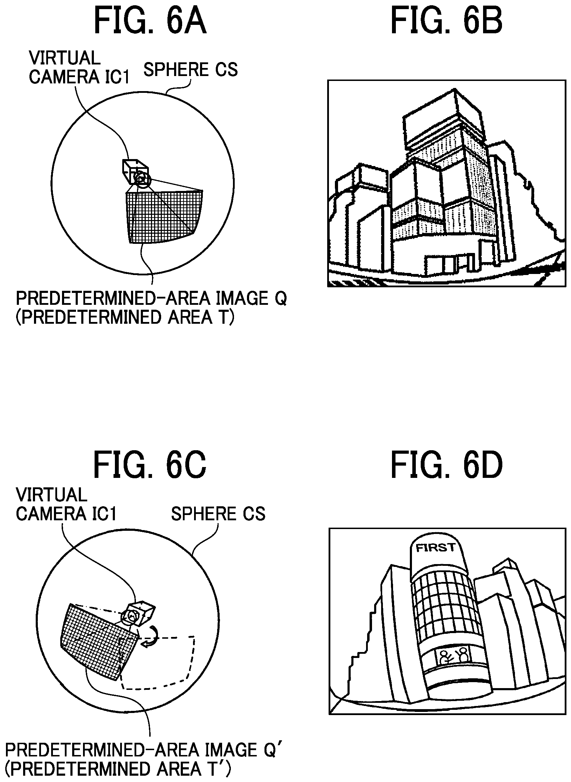

FIG. 5 is an illustration of relative positions of a virtual camera and a predetermined area when the spherical image CE is represented as a three-dimensional solid sphere. The position of the virtual camera IC1 corresponds to the position of the virtual viewpoint of the user viewing the spherical image CE represented as a surface area of the three-dimensional solid sphere. FIG. 6A is a perspective view of the virtual camera IC1 and the predetermined area T illustrated in FIG. 5. FIG. 6B is a diagram illustrating the predetermined-area image Q of FIG. 6A displayed on the display. FIG. 6C is a view of the predetermined area T obtained by changing the viewpoint of the virtual camera IC1 illustrated in FIG. 6A. FIG. 6D is a diagram illustrating the predetermined-area image Q of FIG. 6C displayed on the display.

Assuming that the spherical image CE having been generated is a surface area of the solid sphere CS, the virtual camera IC1 is inside of the spherical image CE as illustrated in FIG. 5. The predetermined area T in the spherical image CE is an imaging area of the virtual camera IC1. Specifically, the predetermined area T is specified by field-of-view information indicating an imaging direction and an angle of view of the virtual camera IC1 in a three-dimensional virtual space including the spherical image CE. The field-of-view information is also referred to as "area information".

Further, zooming in or out the predetermined area T may be performed through bringing the virtual camera IC1 closer to or away from the spherical image CE. The predetermined-area image Q is an image of the predetermined area T, in the spherical image CE. The predetermined area T is defined by an angle of view $\alpha$ of the virtual camera IC1 and a distance f from the virtual camera IC1 to the spherical image CE. While the field-of-view information can be defined by the angle of view and the distance, in some cases, the field of view and the angle of view may be used interchangeably, as the change in the angle of view changes the field of view.

When the virtual viewpoint of the virtual camera IC1 is shifted or changed from the state illustrated in FIG. 6A to the right (left in the drawing) as illustrated in FIG. 6C, the predetermined area T in the spherical image CE is shifted to a predetermined area T'. Accordingly, the predetermined-area image Q displayed on the display is changed to a predetermined-area image Q'. The image displayed on the display changes from the image illustrated in FIG. 6B to the image illustrated in FIG. 6D.

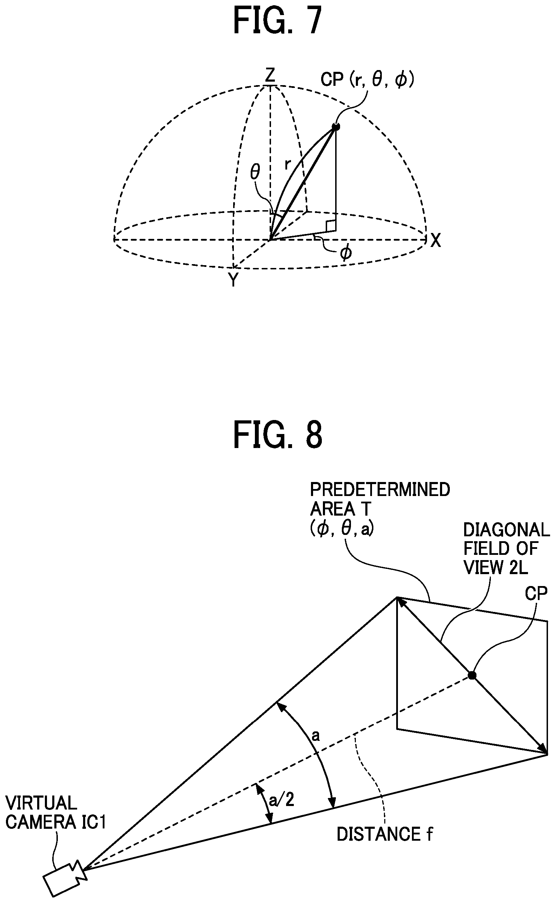

The relationship between the field-of-view information and the image of the predetermined area T is described below with reference to FIGs. 7 and 8.

FIG. 7 is a diagram illustrating a point in a three-dimensional Euclidean space defined in spherical coordinates. FIG. 8 is a schematic diagram illustrating the relation between the predetermined area T and a point of interest (center point CP).

In FIG. 7, the center point CP is represented by a spherical polar coordinate system to obtain position coordinates (r, 0, φ). The positional coordinates (r, θ, φ) represent a radius vector, a polar angle, and an azimuth angle. The radius vector r is a distance from the origin of a three-dimensional virtual space including the spherical image CE to any point (the center point CP in FIG. 8). Accordingly, the radius vector r is equal to the distance f illustrated in FIG. 8.

As illustrated in FIG. 8, when the center of the predetermined area T that is the imaging area of the virtual camera IC1 is assumed to be the center point CP in FIG. 7, a trigonometric function equation expressed by the following Formula 1 is satisfied.

$$(L/f) = \tan(a/2) \ (\text{Formula } 1)$$

f denotes the distance from the virtual camera IC1 to the center point CP of the predetermined area T. L denotes the distance between the center point CP and a given vertex of the predetermined area T, while 2L is a diagonal line. a denotes the angle of view. In this case, the field-of-view information for specifying the predetermined area T can be represented by pan ($\theta$), tilt ($\varphi$), and fov (a). Zooming in or out the predetermined area T may be determined by increasing or decreasing the range (arc) of the angle of view a.

Overview of Communication System

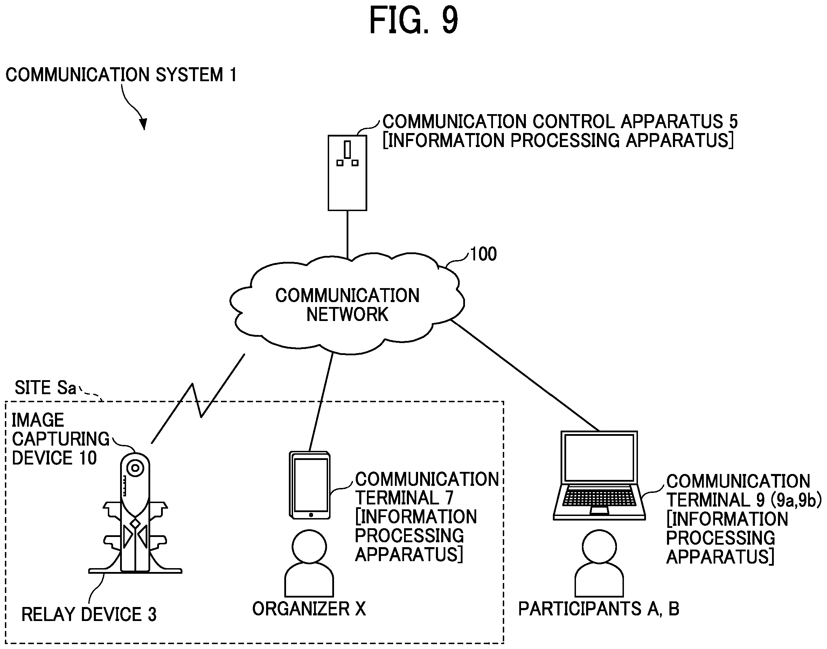

An overview of a communication system 1 is described below with reference to FIG. 9. FIG. 9 is a schematic diagram illustrating a configuration of the communication system 1.

As illustrated in FIG. 9, the communication system 1 includes the image capturing device 10, the relay device 3, the communication control apparatus 5, the communication terminal 7, and the communication terminals 9a and 9b. The communication system 1 is an example of an information processing system. The communication terminals 9a and 9b are collectively referred to as the "communication terminal 9". The communication control apparatus 5, the communication terminal 7, and the communication terminal 9 are examples of an information processing apparatus. Each of the communication terminals 7 and 9 may be referred to as a "display terminal" that displays, for example, an image.

The image capturing device 10 is a digital camera, which obtains a wide-field image, such as a spherical image, as described above. The relay device 3 has a cradle function for charging the image capturing device 10 and transmitting and receiving data to and from the image capturing device 10. The relay device 3 communicates with the image capturing device 10 via a contact point and communicates with the communication control apparatus 5 via a communication network 100. Examples of the communication network 100 include the Internet, a local area network (LAN), and a wireless router.

The communication control apparatus 5 is, for example, a computer, and can communicate with the relay device 3 and the communication terminals 7 and 9 via the communication network 100. The communication control apparatus 5 manages, for example, field-of-view information, and thus may be referred to as an "information management apparatus". The communication control apparatus 5 may be implemented by a single computer or a plurality of computers.

The communication terminals 7 and 9 are computers such as smartphones, notebook personal computers (PCs), and communicate with the communication control apparatus 5 via the communication network 100. Each of the communication terminals 7 and 9 is installed with OpenGL ES and creates the predetermined-area image (see FIG. 6) from the spherical image received from the communication control apparatus 5.

Further, the image capturing device 10 and the relay device 3 are placed at predetermined positions, for example, by an organizer X on a site Sa such as a construction site, exhibition venue, educational institution, or medical facility. The communication terminal 7 is operated by the organizer X. The communication terminal 9a is operated by a participant A such as a viewer at a remote location from the site Sa. The communication terminal 9b is operated by a participant B such as a viewer at a remote location from the site Sa. The participant An and participant B may be at the same location or at different locations.

The communication control apparatus 5 transmits (distributes) the wide-field image and the sound data, which are obtained from the image capturing device 10 via the relay device 3, to the communication terminals 7 and 9. The communication control apparatus 5 transmits (distributes) the captured image and the sound data, which are obtained from one of the communication terminal 7 and 9, to the other one of the communication terminal 7 and 9. The captured image transmitted from the image capturing device 10 via the relay device 3 is a wide-field image. In a case where a single-lens reflex camera is used instead of the image capturing device 10, the captured image is a regular narrow-field image. The captured image may be a moving image or a still image.

Hardware Configuration

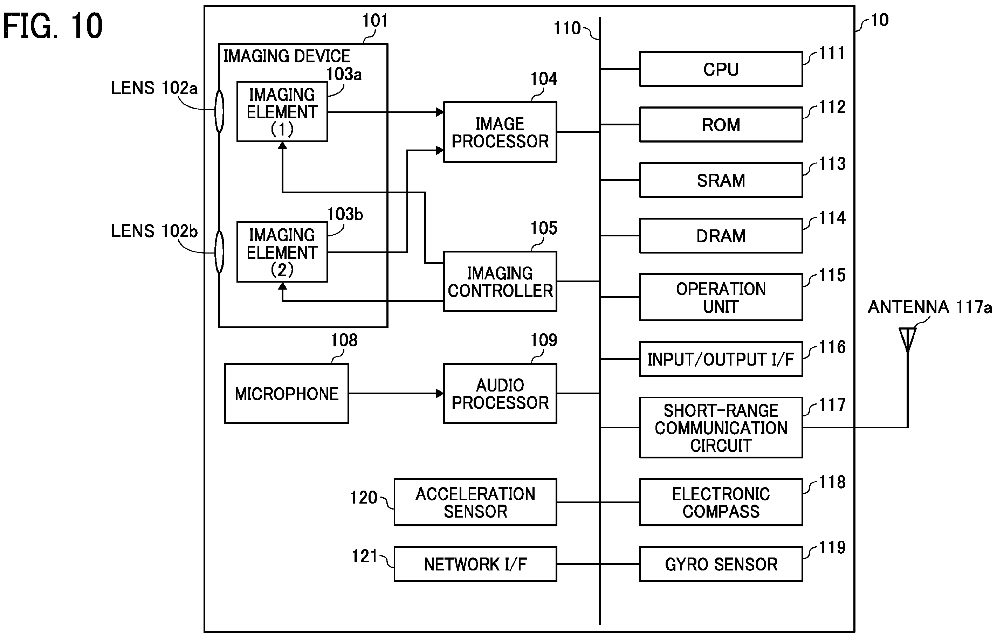

Hardware configurations of the image capturing device 10, the relay device 3, the communication terminal 7, and the communication terminal 9 are described in detail with reference to FIGs. 10 to 12.

Hardware Configuration of Image Capturing Device

FIG. 10 is a block diagram illustrating a hardware configuration of the image capturing device 10. As illustrated in FIG. 10, the image capturing device 10 includes an imaging device 101, an image processor 104, an imaging controller 105, a microphone 108, an audio processor 109, a central processing unit (CPU) 111, a read-only memory (ROM) 112, a static random-access memory (SRAM) 113, a dynamic random-access memory (DRAM) 114, an operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The imaging device 101 includes two wide-angle lenses 102a and 102b, each having an angle of view of equal to or greater than 180 degrees so as to form a hemispherical image. The wide-angle lenses 102a and 102b may be collectively referred to as the lens 102 in the following description unless they need to be distinguished from each other. The imaging device 101 further includes the two imaging elements 103a and 103b corresponding to the lenses 102a and 102b, respectively.

Each of the imaging elements 103a and 103b includes an imaging sensor such as a complementary metal oxide semiconductor (CMOS) sensor or a charge-coupled device (CCD) sensor, a timing generation circuit, and a group of registers. The imaging sensor converts an optical image formed by the lens 102a or 102b into an electrical signal and outputs image data. The timing generation circuit generates horizontal or vertical synchronization signals and pixel clocks for the imaging sensor. In the group of registers, data such as various commands and parameters are set for an operation of the imaging element 103a or 103b. As a non-limiting example, the imaging device 101 includes two wide-angle lenses. The imaging device 101 may include one wide-angle lens or three or more wide-angle lenses.

Each of the imaging elements 103a and 103b of the imaging device 101 is connected to the image processor 104 via a parallel I/F bus. Each of the imaging elements 103a and 103b of the imaging device 101 is further connected to the imaging controller 105 via a serial I/F bus, such as an internet integrated circuit (I2C) bus.

The image processor 104, the imaging controller 105, and the audio processor 109 are connected to the CPU 111 via a bus 110. The ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires image data output from the imaging elements 103a and 103b via the parallel I/F buses and performs predetermined processing on the image data. The image processor 104 combines the processed image data to generate data of an equirectangular projection image (an example of a wide-field image) described below.

The imaging controller 105 functions as a master device while each of the imaging elements 103a and 103b functions as a slave device. The imaging controller 105 sets commands in the group of registers of each of the imaging elements 103a and 103b through the I2C bus. The imaging controller 105 receives the commands from the CPU 111. The imaging controller 105 obtains status data for the group of registers of each of the imaging elements 103a and 103b through the I2C bus and transmits the status data to the CPU 111.

The imaging controller 105 instructs the imaging elements 103a and 103b to output the image data at a time when the shutter button of the operation unit 115 is pressed. In some cases, the image capturing device 10 displays a preview image or displays a moving image on the display. The display may be a display of an external terminal such as a smartphone that performs short-range communication with the image capturing device 10 through the short-range communication circuit 117. In the case of displaying the moving image, the image data are continuously output from the imaging elements 103a and 103b at a predetermined frame rate (frames per minute).

Further, the imaging controller 105 operates in cooperation with the CPU 111 to synchronize the time when the imaging element 103a outputs image data and the time when the imaging element 103b outputs the image data. Although the image capturing device 10 does not include the display in this example, the image capturing device 10 may include the display. The microphone 108 converts sounds to audio data (signals).

The audio processor 109 obtains the sound data output from the microphone 108 through an I/F bus and performs predetermined processing on the sound data.

The CPU 111 controls the entire operation of the image capturing device 10 and executes predetermined processing.

The ROM 112 stores various programs for execution by the CPU 111. Each of the SRAM 113 and the DRAM 114 operates as a work memory to store programs to be executed by the CPU 111 or data being currently processed by the CPU 111. More specifically, in one example, the DRAM 114 stores image data currently processed by the image processor 104 and data of the equirectangular projection image on which processing has been performed.

The operation unit 115 collectively refers to various operation keys, a power switch, a shutter button, and a touch panel having both the displaying and inputting functions. The operation unit 115 allows the user operating the operation unit 115 to input various image capturing modes or image capturing conditions.

The input/output I/F 116 collectively refers to an interface circuit such as a universal serial bus (USB) I/F that allows the image capturing device 10 to communicate with an external medium such as a Secure Digital (SD) card or an external personal computer. The input/output I/F 116 supports at least one of wired and wireless communications. The data of the equirectangular projection image, which is stored in the DRAM 114, may be stored in the external medium via the input/output I/F 116 or transmitted to an external terminal (apparatus) via the input/output I/F 116, as needed.

The short-range communication circuit 117 communicates with the external terminal (apparatus) via the antenna 117a of the image capturing device 10 by short-range wireless communication such as near field communication (NFC), BLUETOOTH, and Wi-Fi. The short-range communication circuit 117 transmits the equirectangular projection image data to the external terminal (apparatus).

The electronic compass 118 calculates the orientation of the image capturing device 10 from the Earth's magnetism to output orientation information.

The orientation information is an example of related information that is metadata described in compliance with Exif and is used for image processing such as image correction of the captured image. The related information also includes the image capturing date and time, which indicates the date and time when the image is captured, and a data size of the image data.

The gyro sensor 119 detects the change in tilt (roll, pitch, yaw) of the image capturing device 10 with the movement of the image capturing device 10. The change in tilt is one example of the related information (metadata) described in compliance with Exif, and used for image processing such as image correction performed on the captured image.

The acceleration sensor 120 detects acceleration of the image capturing device 10 in three axial directions.

The image capturing device 10 may also calculate the posture (tilt with respect to the direction of gravity) of the own device (image capturing device 10) using, for example, the electronic compass 118 and the acceleration sensor 120. With the acceleration sensor 120, the accuracy of the image correction by the image capturing device 10 increases.

The network I/F 121 is an interface for data communication via a router using the communication network 100 such as the Internet. The hardware configuration of the image capturing device 10 is not limited to the one illustrated in FIG. 10, and may be any configuration as long as the functional configuration of the image capturing device 10 can be implemented. At least some of the hardware elements described in FIG. 10 may reside on the relay device 3 or the communication network 100.

Hardware Configuration of Relay Device

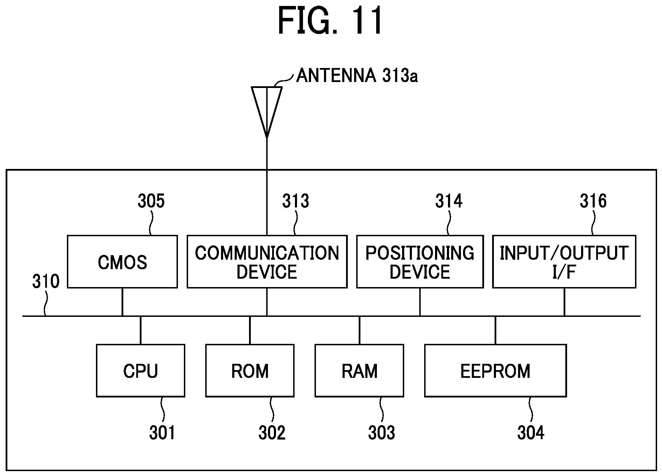

FIG. 11 is a block diagram illustrating a hardware configuration of the relay device 3. The relay device 3 having the hardware configuration illustrated in FIG. 11 is a cradle with a wireless communication function.

As illustrated in FIG. 11, the relay device 3 includes a CPU 301, a ROM 302, a RAM 303, an electrically erasable and programmable ROM (EEPROM) 304, a CMOS sensor 305, a bus line 310, a communication device 313, an antenna 313a for the communication device 313, a positioning device 314, and an input/output I/F 316.

The CPU 301 controls the entire operation of the relay device 3. The ROM 302 stores a control program such as an initial program loader (IPL) used for booting the CPU 301. The RAM 303 is used as a working area for the CPU 301.

The EEPROM 304 reads and writes data under the control of the CPU 301. The EEPROM 304 stores an operating system (OS) and other programs executed by the CPU 301, and various data.

The CMOS sensor 305 is a solid-state imaging element that captures an image of an object under the control of the CPU 301 to obtain image data.

The communication device 313 communicates with the communication network 100 by a wireless communication signal through the antenna 313a.

The positioning device 314 receives a positioning signal including position information (latitude, longitude, and altitude) of the relay device 3 using a global navigation satellite system (GNSS) satellite such as a global positioning system (GPS) satellite or using an indoor MEssaging system (IMES) as an indoor GPS.

The input/output I/F 316 is an interface circuit, such as a USB I/F, which is electrically connected to the input/output I/F 116 of the image capturing device 10. The input/output I/F 316 supports at least one of wired and wireless communications.

The bus line 310 is an address bus or a data bus, which electrically connects the elements illustrated in FIG. 11 such as the CPU 301.

Hardware Configuration of Communication Control Device and Communication Terminal

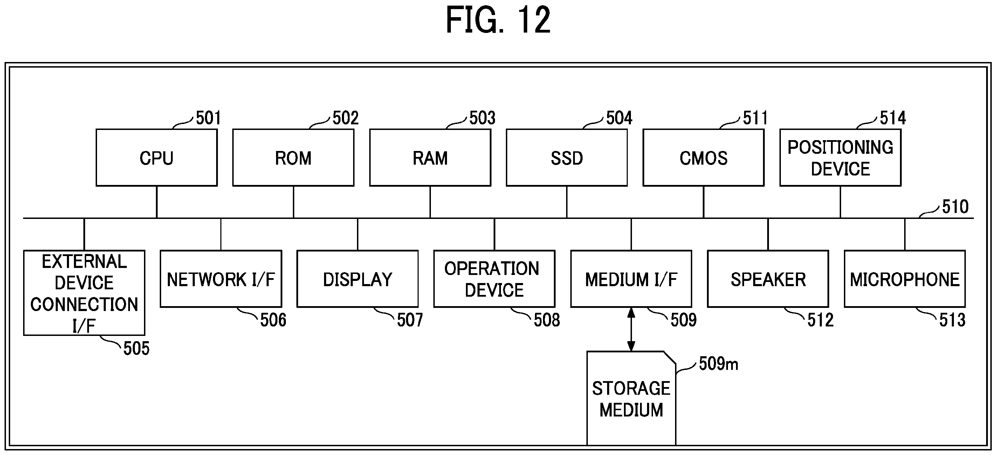

FIG. 12 is a block diagram illustrating a hardware configuration of each of the communication control apparatus 5, the communication terminal 7, and the communication terminal 9. The hardware configuration of each of the communication terminals 7 and 9 is substantially similar to that of the communication control apparatus 5, and thus the description thereof is omitted.

As illustrated in FIG. 12, the communication control apparatus 5 includes, as a computer, a CPU 501, a ROM 502, a RAM 503, a solid-state drive (SSD) 504, an external device connection I/F 505, a network I/F 506, a display 507, an operation device 508, a medium I/F 509, a bus line 510, a CMOS sensor 511, a speaker 512, a microphone 513 and a positioning device 514.

The CPU 501 controls the entire operation of the communication control apparatus 5. The ROM 502 stores programs such as an IPL used for booting the CPU 501. The RAM 503 is used as a working area for the CPU 501.

The SSD 504 reads or writes various data under the control of the CPU 501. The SSD 504 does not have to be provided for the communication terminal 7 or 9, when the communication terminals 7 or 9 is a smartphone. In alternative to the SSD 504, the communication control apparatus 5 may include a hard disk drive (HDD).

The external device connection I/F 505 is an interface that connects the communication control apparatus 5 to various external devices. Examples of such external devices include a display, a speaker, a keyboard, a mouse, a universal serial bus (USB) memory, and a printer.

The network I/F 506 is an interface for data communication via the communication network 100.

The display 507 is one example of a display unit, such as a liquid crystal display or an organic electroluminescent (EL) display, which displays various images.

The operation device 508 is an example of input means operated by a user to select or execute various instructions, select a target for processing, or move a cursor being displayed. Examples of the input means include various operation keys, a power switch, a shutter button, and a touch panel.

The medium I/F 509 controls reading or writing (storing) data from or to a storage medium 509m such as a flash memory. Examples of the storage medium 509m include a digital versatile disc (DVD) and a BLU-RAY DISC.

The CMOS sensor 511 is an example of imaging means, which captures an image of an object under the control of the CPU 501 to obtain image data. The communication control apparatus 5 may include a CCD sensor in alternative to the CMOS sensor 511.

The speaker 512 is a circuit that generates sound such as music or voice by converting an electrical signal into physical vibration. The microphone 513 is a circuit that converts collected (captured) sound into sound data (signals).

The positioning device 314 receives a positioning signal including position information (latitude, longitude, and altitude) of each of the communication terminals 7 and 9 using the GNSS satellite such as the GPS satellite or using the IMES as the indoor GPS.

The bus line 510 is an address bus or a data bus, which electrically connects the elements illustrated in FIG. 12, such as the CPU 501, with one another.

Functional Configurations

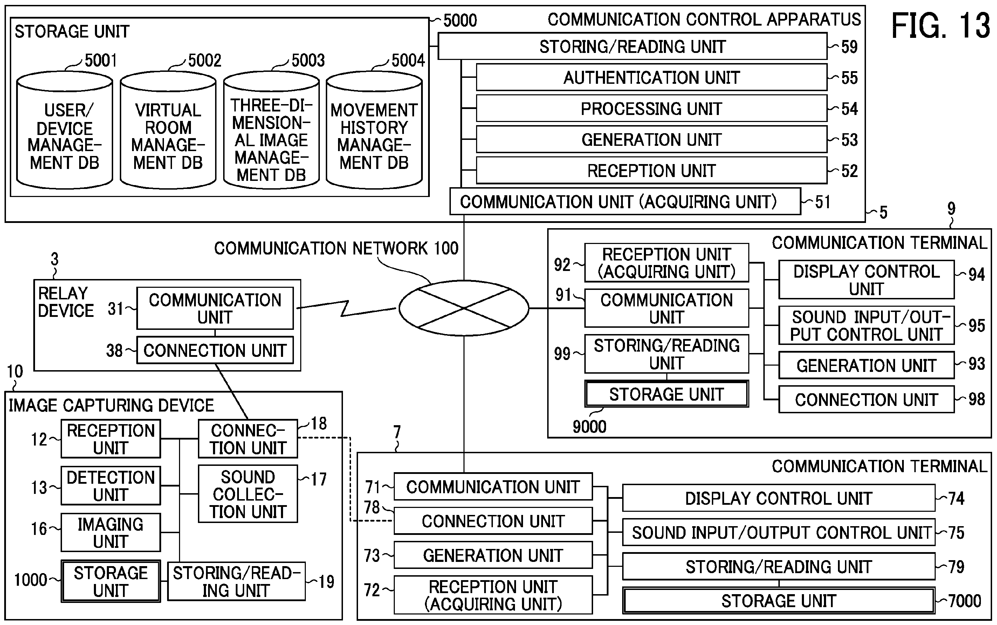

A functional configuration of the communication system 1 is described below with reference to FIGs. 13 to 16.

Functional Configuration of Image Capturing Device

As illustrated in FIG. 13, the image capturing device 10 includes a reception unit 12, a detection unit 13, an imaging unit 16, a sound collection unit 17, a connection unit 18, and a storing/reading unit 19. These units are functions that are implemented by or that are caused to function by operating any of the elements illustrated in FIG. 10 in cooperation with the instructions of the CPU 111 according to the control program for the image capturing device 10 loaded from the SRAM 113 to the DRAM 114.

The image capturing device 10 further includes a storage unit 1000 that is implemented by at least one of the ROM 112, the SRAM 113, and the DRAM 114 illustrated in FIG. 9.

Functional Units of Image Capturing Device

The reception unit 12 of the image capturing device 10 is implemented by the operation unit 115 operating in accordance with instructions from the CPU 111. The reception unit 12 receives an operation input from the user.

The detection unit 13 is implemented by the electronic compass 118, the gyro sensor 119, or the acceleration sensor 120 operating in accordance with instructions from the CPU 111. The detection unit 13 detects the posture of the image capturing device 10 to obtain posture information.

The imaging unit 16 is implemented by the imaging device 101, the image processor 104, and the imaging controller 105 operating in accordance with instructions from the CPU 111. The imaging unit 16 captures, for example, the scenery to obtain a captured image.

The sound collection unit 17 is implemented by the audio processor 109 operating in accordance with instructions from the CPU 111. The sound collection unit 17 picks up sounds around the image capturing device 10.

The connection unit 18 is implemented by the input/output I/F 116 operating in accordance with instructions from the CPU 111. The connection unit 18 performs data communication with the relay device 3.

The storing/reading unit 19 is implemented by processing performed by the CPU 111, and stores various data or information in the storage unit 1000 or reads out various data or information from the storage unit 1000.

Functional Configuration of Relay Device

As illustrated in FIG. 13, the relay device 3 includes a communication unit 31 and a connection unit 38. These units are functions implemented by or caused to function by operating any of the hardware elements illustrated in FIG. 11 in cooperation with the instructions of the CPU 301 according to the control program for the relay device 3 loaded from the EEPROM 304 to the RAM 303.

Functional Units of Relay Device

The communication unit 31 of the relay device 3 is implemented by the communication device 313 operating in accordance with instructions from the CPU 301 illustrated in FIG. 11. The communication unit 31 performs data communication with the image capturing device 10 and the communication control apparatus 5 via the communication network 100.

The connection unit 38 is implemented by the input/output I/F 316 operating in accordance with instructions from the CPU 301. The connection unit 38 performs data communication with the image capturing device 10.

Functional Configuration of Communication Control Apparatus

A functional configuration of the communication control apparatus 5 is described below in detail with reference to FIG. 13. The communication control apparatus 5 includes a communication unit 51, a reception unit 52, a generation unit 53, a processing unit 54, an authentication unit 55, and a storing/reading unit 59. These units are functions implemented by or caused to function by operating any of the hardware elements illustrated in FIG. 12 in cooperation with the instructions of the CPU 501 according to the control program for the communication control apparatus 5 loaded from the SSD 504 to the RAM 503.

The communication control apparatus 5 further includes a storage unit 5000 that is implemented by at least one of the RAM 503 and the SSD 504 illustrated in FIG. 12. The storage unit 5000 includes a user/device management database (DB) 5001, a virtual room management DB 5002, a three-dimensional image management DB 5003, and a movement history management DB 5004.

User/Device Management DB

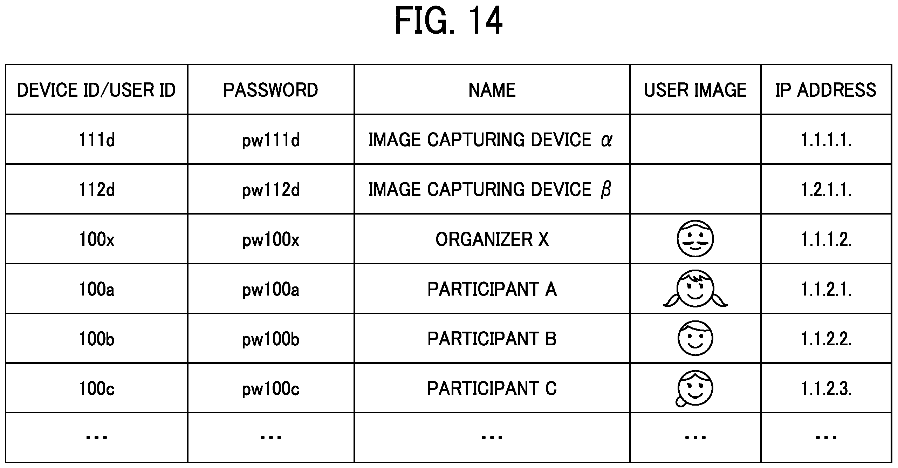

FIG. 14 schematically illustrates a user/device management table. The user/device management DB 5001 includes the user/device management table illustrated in FIG. 14. The user/device management table stores a user ID (or device ID), a password, a name, a user image, and an internet protocol (IP) address in association as data items to be managed.

The user ID is an example of user identification information for identifying a user, such as the organizer X, the participant A, or the participant B. The device ID is an example of device identification information for identifying a device such as the image capturing device 10. When a head mounted display or a similar device is used in addition to the image capturing device 10, the head mounted display or the similar device is also identified as the device to be managed. The password is an example of authentication information set by the user.

The name is the name of the user or the device. The name of the user may be the name of the communication terminal used by the user.

The user image is, for example, an image obtained by schematically modeling the face of the user, or an image of a photograph of the face of the user. The user image is preregistered by the user.

The IP address is an example of address specification information for specifying the address of the device used by the user. Examples of the device include the communication terminal 7, the communication terminal 9, and the image capturing device 10.

Virtual Room Management DB

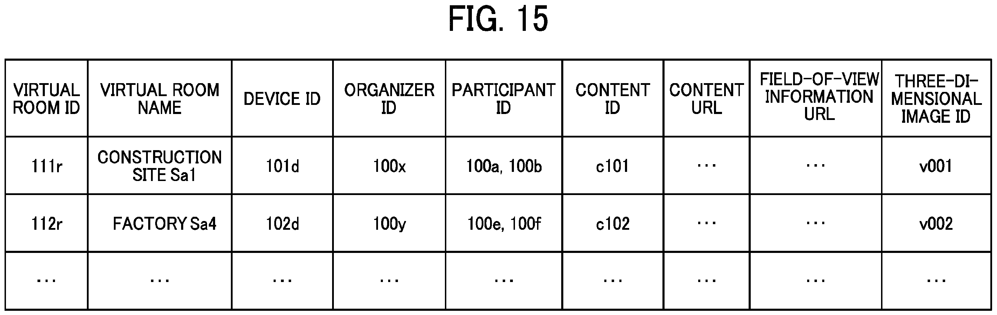

FIG. 15 schematically illustrates a virtual room management table. The virtual room management DB 5002 includes the virtual room management table illustrated in FIG. 15. The virtual room management table stores a virtual room ID, a virtual room name, a device ID, an organizer ID, a participant ID, a content ID, a content uniform resource locator (URL) (storage location information of content data including images and sounds), field-of-view information URL (storage location of field-of-view information), and three-dimensional image ID in association with one another.

The virtual room ID is an example of virtual room identification information for identifying a virtual room.

The virtual room name is the name of the virtual room and is assigned by, for example, the user.

The device ID is the same as the device ID in FIG. 14 and is the ID of a device that has joined the virtual room indicated by the virtual room ID in the same record.

The organizer ID is an example of organizer identification information for identifying the organizer, among the user IDs in FIG. 14, and is an ID of the organizer who participates in the virtual room indicated by the virtual room ID in the same record.

The participant ID is an example of participant identification information for identifying a participant, among the user IDs in FIG. 14, and is an ID of the participant who participates in the virtual room indicated by the virtual room ID in the same record.

The content ID is an example of content identification information for identifying content data including images and sounds. The image in this example is a wide-field image obtained at the time of image capturing. The sound including voice is obtained at the same time of image capturing.

The content URL is an example of content storage location information indicating a location where content data, such as the wide-field image and the sound, is stored (see S54). The content URL is stored in association with the content data, the timestamp indicating the start time and end time of image capturing (image recording) and sound capturing (sound recording), and the image capturing position (absolute position on the earth).

The field-of-view information URL is an example of field-of-view information storage location information indicating a storage location of field-of-view information. The field-of-view information indicates a field of view for a predetermined-area image displayed by a user (for example, the organizer X or the participant An or B) during recording (see Steps S37 to S39). Since the field of view depends on the angle of view, it can be said that the field-of-view information indicates the angle of view.

The three-dimensional image ID is an example of three-dimensional image identification information for identifying a three-dimensional image to be displayed in a display area 620, which is described later.

Three-dimensional Image Management DB

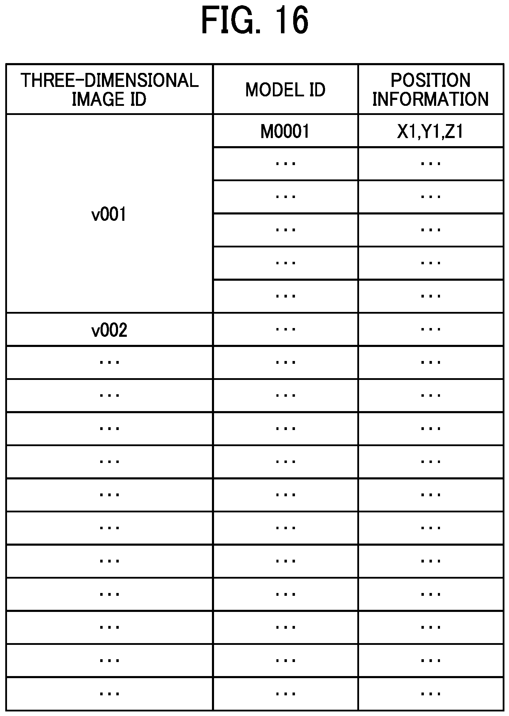

FIG. 16 schematically illustrates a first example of the three-dimensional image management table. The three-dimensional image management DB 5003 includes the three-dimensional image management table illustrated in FIG. 16. The three-dimensional image management table illustrated in 16 stores, for each three-dimensional image ID, a model ID and position information in association with each other, as data items to be managed.

The model ID is an example of three-dimensional model identification information for identifying a three-dimensional model. The three-dimensional model is generated based on a point cloud acquired by, for example, a time-of-flight (TOF) camera.

The position information indicates the position of the three-dimensional model in a three-dimensional virtual space by three-dimensional coordinates of XYZ. The position information is indicated by, for example, the three-dimensional coordinates of eight points defining a rectangular parallelepiped space occupied by the three-dimensional model.

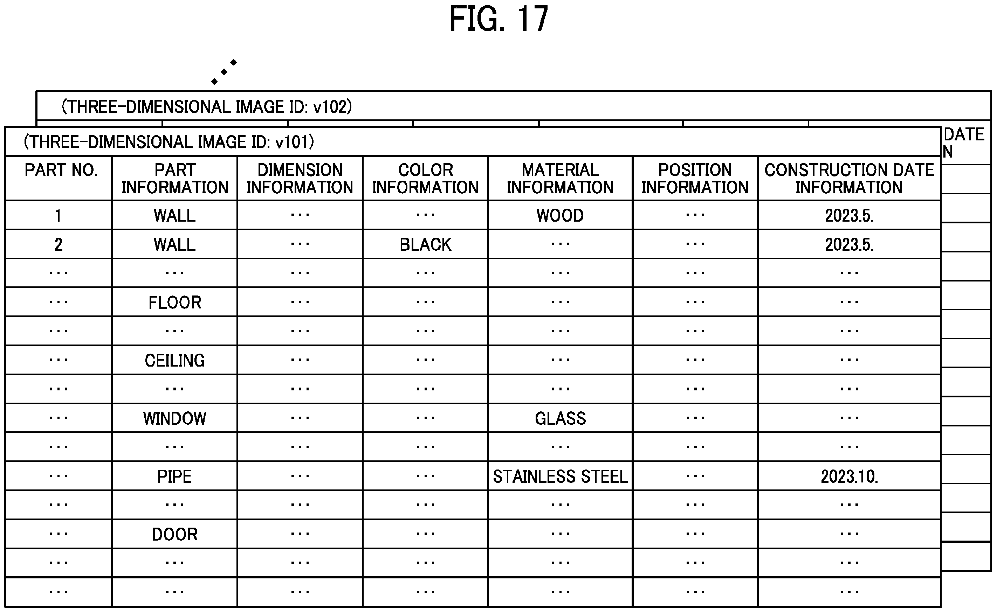

FIG. 17 schematically illustrates a second example of the three-dimensional image management table. The three-dimensional image management DB 5003 includes the three-dimensional image management table illustrated in FIG. 17. The three-dimensional image management table illustrated in FIG. 17 is a table for managing attribute information indicating attributes of parts (three-dimensional models) that constitute a structure in a three-dimensional virtual space. The three-dimensional image management table illustrated in FIG. 17 stores, for each three-dimensional image ID, a part number (NO.), part information, dimension information, color information, material information, position information, and construction date information in association with one another, as attribute information.

The part information is information for identifying a part such as a wall, a floor, a ceiling, a window, a pipe, or a door, each of which is made up of various components.

The dimension information is information for identifying the dimension of a part in the virtual space and is indicated by, for example, numerical values in three-axis directions of XYZ.

The color information is information for identifying the color of a part. The material information is information for identifying the material of a part.

The position information is information for identifying the position of a part in the virtual space and is indicated by, for example, coordinates in three-axis directions of XYZ. The position information may be used to determine whether multiple parts are adjacent to each other.

The construction date information is information indicating a scheduled date when the part is scheduled to be constructed in the real world. With the construction date information, a structure excluding an unconstructed part at a certain point in time can be identified.

As described above, the position information in FIG. 16 and the position information in FIG. 17 are stored in association with the absolute position on the earth. For example, by associating the origin (X = 0, Y = 0, Z = 0) of the position information in FIGs. 16 and 17 with the absolute position (latitudes, longitudes, altitudes) on the earth, all coordinates in the three-dimensional image including the three-dimensional model and parts, are associated with the absolute position on the earth.

The three-dimensional image management DB 5003 may store, for example, a three-dimensional point cloud, a mesh object, and a textured mesh object, instead of the three-dimensional model.

Movement History Management DB

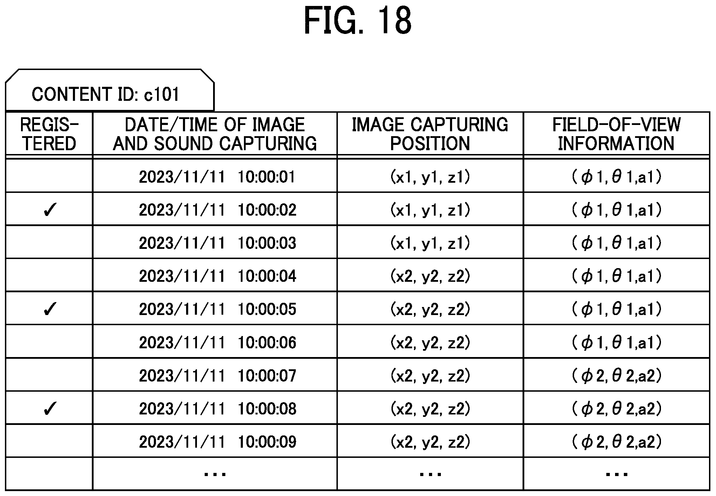

FIG. 18 schematically illustrates a movement history management table. The movement history management DB 5004 includes the movement history management table illustrated in FIG. 18. The movement history management DB 5004 is referred to when operating in the display content lock mode. The display content lock mode is a mode in which the display contents of screens (for example, screens 600 and 601 to be described below) are kept being the same for all of the communication terminals 7, 9a, and 9b participating in the same virtual room. Specifically, the display content being displayed on one of the communication terminals 7, 9a, and 9b (for example, the communication terminals 9a) is set. The display content, which is the same as the set display content, is displayed on the other communication terminals (for example, the communication terminals 7 and 9b).

The movement history management table stores, for each content ID, the date and time of image and sound capturing, the image capturing position, the field-of-view information in association with one another, as data items to be managed. When sounds are not collected, the date and time of image and sound capturing indicate the date and time of image capturing. The position of the image capturing device 10 is measured by the positioning device 314 of the relay device 3 to which the image capturing device 10 is attached. A positioning unit similar to the positioning device 314 may be provided for the image capturing device 10, to measure the position of the image capturing device 10.

The content ID illustrated in FIG. 18 is the same as the content ID illustrated in FIG. 15.

The date and time of image and sound capturing indicate the date and time when the image capturing device 10 captures the image and collects the sound.

The image capturing position indicates the position (absolute position on the earth) of the image capturing device 10 at the date and time of image capturing. When sounds are collected, the image capturing position is also a sound collection position.

The field-of-view information is information for specifying a predetermined area, which is to be displayed as a predetermined-area image on any one of the communication terminals 7, 9a, and 9b (in this example, the communication terminal 9a) (see FIG. 8). For example, in the display content lock mode, the display contents of the screens 600 and 601, which are displayed to and browsed by the participant A at the communication terminal 9a, are displayed on the communication terminal 7 of the organizer X and the communication terminal 9b of the participant B. The field-of-view information (including the user IDs), which is received by the communication control apparatus 5 at S38 to be described below, is managed using the field-of-view information URL in the virtual room management DB 5002 (see FIG. 15). In addition, the field-of-view information is managed using the date and time of image and sound capturing in the movement history management DB 5004 (see FIG. 18). In this case, the communication terminals 7 and 9b other than the communication terminal 9a having the fixed display contents do not transmit the field-of-view information. In other words, processes S37 and S39 described later are not performed.

In the display content lock mode in which the display contents are fixed to the display contents of the communication terminal 9a, the communication control apparatus 5 stores the field-of-view information received at S37 to S39 in the storage location indicated by the field-of-view information URL, which is managed by the virtual room management DB 5002 (see FIG. 15). The communication control apparatus 5 further stores, in the movement history management DB 5004, the field-of-view information for specifying the predetermined-area image on the screen 600 or 601, which is being displayed on the communication terminal 9a as the fixed display contents. The field-of-view information is received at S38.

In the display content lock mode in which the display contents are fixed to the display contents of the communication terminal 9a, the communication terminals 7 and 9b are caused to display the predetermined-area image having the same display contents as those of the communication terminal 9a. The communication control apparatus 5 transmits the field-of-view information (including the user ID of the participant A) received at S38, to the communication terminal 7 at S13 and to the communication terminal 9b at S15, as described below. Thus, the communication terminal 7 (the display control unit 74) and the communication terminal 9a (the display control unit 94) can display the same contents as the display contents of the predetermined-area image being displayed at the communication terminal 9a.

In the display content lock mode, the display contents may be fixed to the screen displayed and browsed at the communication terminal 7 of the organizer X. The other communication terminals 9a and 9b then display the same display contents as those of the communication terminal 7. Alternatively, the display contents may be fixed to the screen displayed and browsed at the communication terminal 9b of the participant B. The other communication terminals 7 and 9a then display the same display contents as those of the communication terminal 9b.

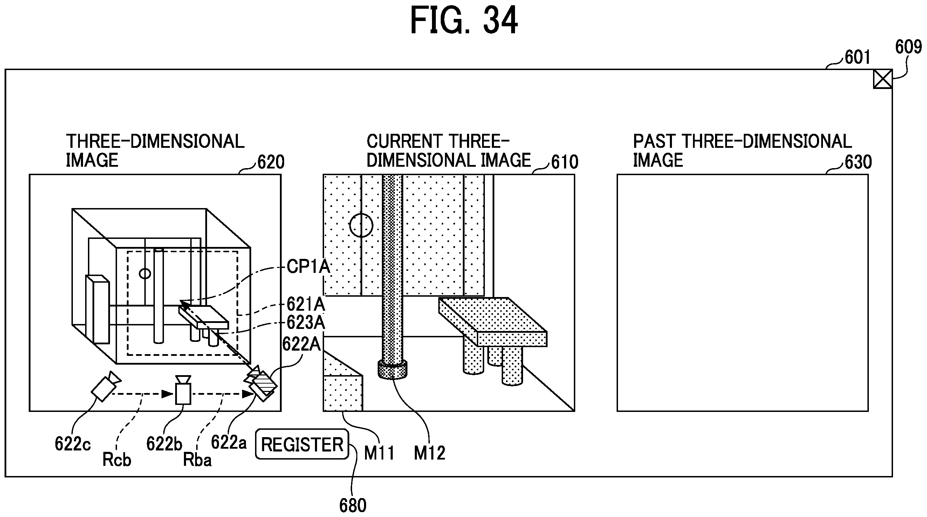

The movement history management table further includes a "registered" field indicating registration of the display position of the icon of the virtual camera IC1, for each date and time of image and sound capturing. When the flag is registered in the "registered" field, as illustrated in FIG. 34, the generation unit 53 may display, on a display area 620 of the three-dimensional image, an icon 622a of the virtual camera IC1 at the past image capturing position that is registered.

In this disclosure, the image capturing positions being managed do not have to be the image capturing positions of the same image capturing device 10. In other words, as long as an image can be taken, any image capturing device, including the image capturing device 10, may be used. For example, a first image capturing position indicating the position at a particular time may be the position of one image capturing device (for example, a first image capturing device), and a second image capturing position at another particular time may be the position of another image capturing device (for example, a second image capturing device).

Functional Configuration of Communication Control Apparatus

The functional configuration of the communication control apparatus 5 is described below in detail with reference to FIG. 13.

The communication unit 51 of the communication control apparatus 5 is implemented by the network I/F 506 operating in accordance with instructions from the CPU 501 illustrated in FIG. 12. The communication unit 51 performs data communication with other devices, such as the relay device 3 and the communication terminals 7 and 9, via the communication network 100. The communication unit 51 also functions as an acquiring unit and acquires instruction information indicating an instruction transmitted from the communication terminals 7 and 9.

The reception unit 52 is implemented by the operation device 508 operating in accordance with instructions from the CPU 501. The reception unit 52 receives an operation input from the user such as a system administrator.

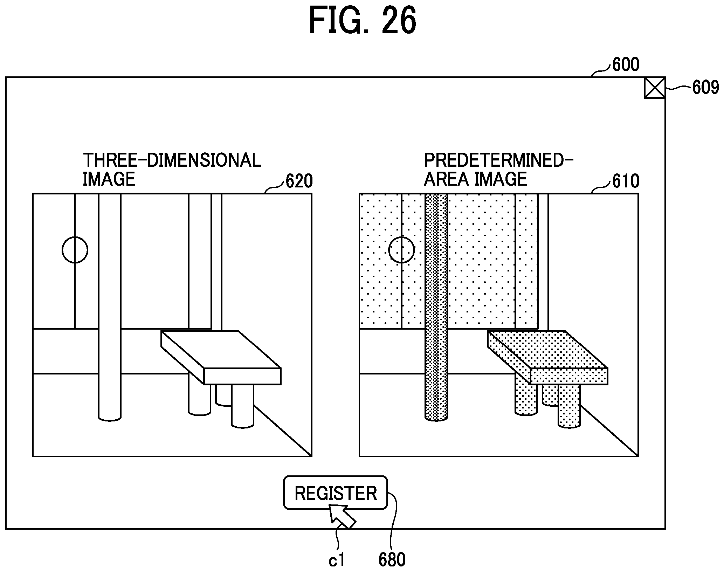

The generation unit 53 is implemented by, for example, processing of the CPU 501 and generates, using data stored in the storage unit 5000, a screen to be transmitted to each of the communication terminals 7 and 9. For example, the generation unit 53 creates the screen 600 including a display area 610 and the display area 620 as illustrated in FIG. 26. The display area 610 displays a predetermined-area image representing a predetermined area of a wide-field image (an example of a captured image) captured by the image capturing device 10. The display area 620 displays at least a part of a three-dimensional image including a second position (coordinates), which is associated with a first position (coordinates) in the wide-field image by the processing unit 54.

The processing unit 54 is implemented by, for example, processing of the CPU 501, and associates first position information and second position information. The first position information indicates the first position in the captured image obtained by imaging a target object by the image capturing device 10. The second position information indicates the second position in the three-dimensional image including a three-dimensional area corresponding to the target object. The processing unit 54 may be referred to as an "association unit".

The authentication unit 55 is implemented by, for example, processing of the CPU 501 and authenticates, for example, whether the user has the authority to use the virtual room.

The storing/reading unit 59 is implemented by, for example, processing of the CPU 501 and stores various data or information in the storage unit 5000 or reads various data or information from the storage unit 5000.

Functional Configuration of Communication Terminal 7

The functional configuration of the communication terminal 7 is described below in detail with reference to FIG. 13. The communication terminal 7 includes a communication unit 71, a reception unit 72, a generation unit 73, a display control unit 74, a sound input/output control unit 75, a connection unit 78, and a storing/reading unit 79. These units are functions implemented by or caused to function by operating any of the hardware elements illustrated in FIG. 12 in cooperation with the instructions of the CPU 501 according to the control program for the communication terminal 7 loaded from the SSD 504 to the RAM 503.

The communication unit 71 of the communication terminal 7 is implemented by the network I/F 506 operating in accordance with instructions from the CPU 501. The communication unit 71 performs data communication with other devices such as the communication control apparatus 5 via the communication network 100.

The reception unit 72 is implemented by the operation device 508 operating in accordance with instructions from the CPU 501. The reception unit 72 receives an operation input from the user such as the organizer X. The reception unit 72 also functions as an acquiring unit and acquires an instruction given according to a user operation.

The generation unit 73 is implemented by processing of the CPU 501 and generates, using data stored in the storage unit 7000, a screen to be displayed on the own terminal (in this example, the communication terminal 7). In a case where the generation unit 53 of the communication control apparatus 5 generates a screen for display at the communication terminal 7, the communication terminal 7 may or may not include the generation unit 73.

The display control unit 74 is implemented by processing of the CPU 501, and controls the display 507 of the communication terminal 7 or an external display connected to the external device connection I/F 505 to display various images.

The sound input/output control unit 75 is implemented by processing of the CPU 501, and causes the speaker 512 of the communication terminal 7 or an external speaker connected to the external device connection I/F 505 to output sound. The sound input/output control unit 75 further causes the microphone 513 or an external microphone connected to the external device connection I/F 505 to collect sound.

The connection unit 78 is implemented by the external device connection I/F 505 operating in accordance with instructions from the CPU 501. The connection unit 78 performs data communication with the connection unit 18 of the image capturing device 10 when the communication terminal 7 functions as the relay device 3.

The storing/reading unit 79 is implemented by processing of the CPU 501, and stores various data or information in the storage unit 7000 or reads various data or information from the storage unit 7000.

Functional Configuration of Communication Terminal 9

The functional configuration of the communication terminal 9 is described below in detail with reference to FIG. 13.

The communication terminal 9 includes a communication unit 91, a reception unit 92, a generation unit 93, a display control unit 94, a sound input/output control unit 95, a connection unit 98, and a storing/reading unit 99. These units are functions implemented by or caused to function by operating any of the hardware elements illustrated in FIG. 12 in cooperation with the instructions of the CPU 501 according to the control program for the communication terminal 9 loaded from the SSD 504 to the RAM 503.

The communication terminal 9 further includes a storage unit 9000 that is implemented by the RAM 503 and the SSD 504 illustrated in FIG. 12.

The communication unit 91 of the communication terminal 9 is implemented by the network I/F 506 operating in accordance with instructions from the CPU 501. The communication unit 91 performs data communication with other devices such as the communication control apparatus 5 via the communication network 100.

The reception unit 92 is implemented by the operation device 508 operating in accordance with instructions from the CPU 501. The reception unit 72 receives an operation input from the user such as the participant An or B. The reception unit 92 also functions as an acquiring unit and acquires an instruction given according to a user operation.

The generation unit 93 is implemented by processing of the CPU 501 and generates, using data stored in the storage unit 9000, a screen to be displayed on the own terminal (in this example, the communication terminal 9). In a case where the generation unit 53 of the communication control apparatus 5 generates a screen, the communication terminal 9 may or may not include the generation unit 93.

The display control unit 94 is implemented by processing of the CPU 501, and controls the display 507 of the communication terminal 9 or an external display connected to the external device connection I/F 505 to display various images.

The sound input/output control unit 95 is implemented by processing of the CPU 501, and causes the speaker 512 of the communication terminal 9 or an external speaker connected to the external device connection I/F 505 to output sound. The sound input/output control unit 95 further causes the microphone 513 or an external microphone connected to the external device connection I/F 505 to collect sound.

The connection unit 98 is implemented by the external device connection I/F 505 operating in accordance with instructions from the CPU 501. The connection unit 98 performs data communication with an external device connected by wire or wirelessly.

The storing/reading unit 99 is implemented by, for example, processing of the CPU 501 and stores various data (or information) in the storage unit 9000 or reads various data (or information) from the storage unit 9000.

Processes or Operations

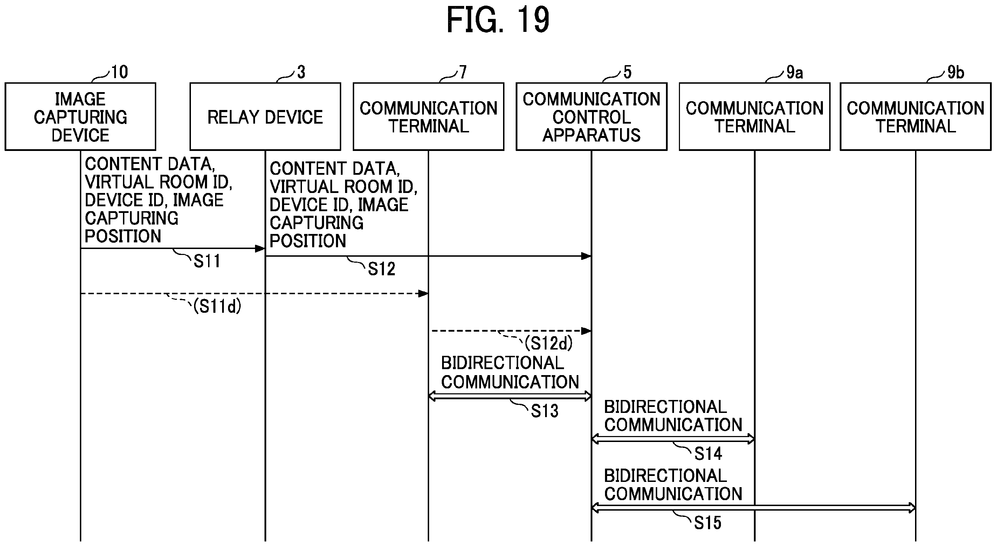

Processes or operations are described below with reference to FIG. 19 to FIG. 35. The processes described below are performed after the image capturing device 10 and the communication terminals 7 and 9 have entered the same virtual room.

Process for Transmitting Content Data in Communication System

A process for transmitting content data in the communication system 1 is described below with reference to FIG. 19. FIG. 19 is a sequence diagram illustrating the process for transmitting content data, performed by the communication system 1. In the following description of the process, the image capturing device 10, the communication terminal 7 used by the organizer X, the communication terminal 9a used by the participant A, and the communication terminal 9b used by the participant B are in the same virtual room. When the virtual room is created, the storing/reading unit 79 adds one record for the created virtual room to the virtual room management DB 5002 (see FIG. 15), and stores the virtual room ID, the virtual room name, the device ID, the organizer ID, and the participant ID in association in the added record. The content ID, the content URL, the field-of-view information URL, and the three-dimensional image ID are stored later. The processes of steps S11 to S15 of FIG. 19 are repeated, for example, about 30 times or 60 times per second.

At S11, the image capturing device 10 captures a spherical image of an area in the site Sa using the imaging unit 16, and collects sounds around the area in the site Sa using the sound collection unit 17, to obtain content data including the wide-field image and the sound data. After that, the connection unit 18 transmits the content data to the relay device 3. The collected sounds include the voice of the organizer X at the site Sa.

The connection unit 18 further transmits the virtual room ID for identifying the virtual room in which the image capturing device 10 participates, and the device ID for identifying the image capturing device 10. The image capturing device 10 transmits, to the relay device 3, information on an image capturing position that is a position (absolute position) of the image capturing device 10, at predetermined time intervals (for example, every second). Accordingly, the connection unit 38 of the relay device 3 acquires the content data, the virtual room ID, the device ID, and the image capturing position. The image capturing position is a position obtained by the positioning device 314, and is an absolute position on the earth.

At S12, the communication unit 31 of the relay device 3 transmits, to the communication control apparatus 5 via the communication network 100, the content data, the virtual room ID, the device ID, and the image capturing position received by the connection unit 38 at S11. Accordingly, the communication control apparatus 5 receives the content data, the virtual room, the device ID, and the image capturing position at the communication unit 51. The storing/reading unit 59 of the communication control apparatus 5 stores the content data received at S12 in the virtual room management DB 5002 (see FIG. 15), at the storage location indicated by the content URL corresponding to the virtual room ID received at S12.

In alternative to performing S11, at S11d, the image capturing device 10 may transmit the content data, the virtual room ID, the device ID, and the image capturing position to the communication terminal 7 without transmitting those to the relay device 3. Further, in alternative to performing S12, at S12d, the communication terminal 7 transmits the content data, the virtual room ID, the device ID, and the image capturing position to the communication control apparatus 5.

At S13, at the communication control apparatus 5, the storing/reading unit 59 searches the virtual room management DB 5002 based on the virtual room ID received at S12 to read the user IDs (the organizer ID and the participant IDs) of the users who participate in the same virtual room as the image capturing device 10. The storing/reading unit 59 also searches the user/device management DB 5001 based on the read organizer ID and participant IDs to read the corresponding user images of the organizer X and the participants An and B and the corresponding IP addresses of the communication terminal 7, the communication terminal 9a, and the communication terminal 9b. The communication unit 51 refers to the IP address of the communication terminal 7 and communicates bidirectionally with the communication terminal 7. This bidirectional communication is described later.

At S14, the communication unit 51 of the communication control apparatus 5 refers to the IP address of the communication terminals 9a and communicates bidirectionally with the communication terminal 9a. This bidirectional communication is described later.

At S15, similarly, the communication unit 51 of the communication control apparatus 5 refers to the IP address of the communication terminals 9b, and communicates bidirectionally with the communication terminal 9b. This bidirectional communication is described later.

Process for Starting Image Recording and Sound Recording in Communication System

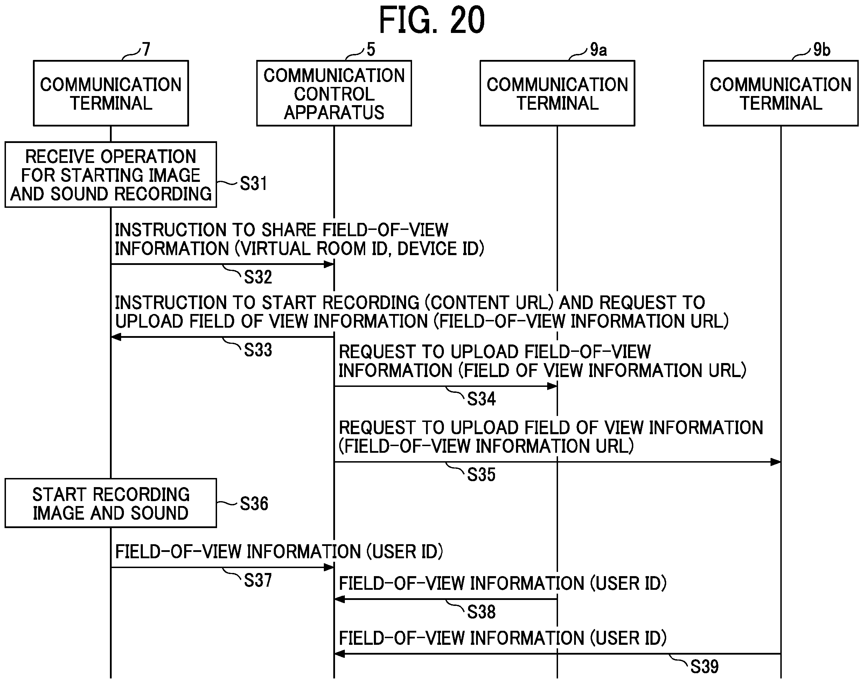

A process for starting image recording and sound recording in the communication system 1 is described below with reference to FIG. 20. FIG. 20 is a sequence diagram illustrating the process of starting recording of images and sounds, performed by the communication system 1.

At S31, the reception unit 72 of the communication terminal 7 receives an operation to start image recording and sound recording from the organizer X.

Before starting image recording and sound recording, at S32, the communication unit 71 of the communication terminal 7 transmits an instruction to share field-of-view information (sharing instruction) to the communication control apparatus 5. The sharing instruction includes the virtual room ID of the virtual room in which the communication terminal 7 participates and the device ID of the image capturing device 10. Accordingly, the communication unit 51 of the communication control apparatus 5 receives the sharing instruction to share the field-of-view information.

At S33, the storing/reading unit 59 of the communication control apparatus 5 stores the content URL and the field-of-view information URL in the virtual room management DB (see FIG. 15). The communication unit 51 transmits an instruction to start recording and a request to upload field-of-view information to the communication terminal 7. The instruction to start recording includes information on the content URL indicating a location where the communication terminal 7 stores the content data after recording. The request to upload includes information on the field-of-view information URL indicating a location where the field-of-view information is stored. Accordingly, the communication unit 71 of the communication terminal 7 receives the instruction to start recording and the request to upload field-of-view information.

At S34, the communication unit 51 transmits a request to upload field-of-view information to the communication terminal 9a. The request to upload includes information on the field-of-view information URL indicating a location where the field-of-view information is stored. Accordingly, the communication unit 91 of the communication terminal 9a receives the request to upload field-of-view information.

At S35, similarly, the communication unit 51 transmits a request to upload field-of-view information to the communication terminal 9b. The request to upload includes information on the field-of-view information URL indicating a location where the field-of-view information is stored. Accordingly, the communication unit 91 of the communication terminal 9b receives the request to upload field-of-view information.

At S36, at the communication terminal 7, the storing/reading unit 79 starts recording images and sounds, which are the content data received at S13 of FIG. 19. In the case where S12d is performed instead of S12 in FIG. 19, the communication terminal 7 starts recording images and sounds, which are content data received from the image capturing device 10 at S11d, instead of the content data received from the communication control apparatus 5 at S13.

At S37, the communication terminal 7 displays the predetermined-area image (see FIG. 6B), which is the predetermined area (see FIG. 6A) of the wide-field image received at S13. When the reception unit 72 receives an operation for changing an angle of view from the organizer X, the display control unit 74 displays the predetermined-area image (see FIG. 6D), which is the predetermined area (see FIG. 6C) that is changed from the previous predetermined area (see FIG. 6A) in the same wide-field image. In other words, the reception unit 72, which serves as an acquiring unit, acquires the field-of-view information (pan, tilt, fov) for specifying the predetermined area of the wide-field image to be displayed on the display 507, in response to reception of an operation for displaying the predetermined area of the wide-field image from the user, such as the organizer X. The communication unit 71 transmits the field-of-view information for specifying the changed predetermined area to the communication control apparatus 5, so that the field-of-view information URL received at S33 is updated. The field-of-view information includes the user ID of the organizer X who uses the communication terminal 7 that is the transmission source. Accordingly, the communication unit 51 of the communication control apparatus 5 receives the field-of-view information.

The storing/reading unit 79 stores the user ID of the organizer X, the field-of-view information, and the reception date and time when the information is received, in association with the field-of-view URL stored in the virtual room management DB 5002 (see FIG. 15). The reception date and time is, for example, the date and time when the reception unit 72 of the communication terminal 7 receives the user operation for changing the angle of view from the organizer X.

At S38, the process that is substantially the same as the process of S37 is also performed at the communication terminal 9a, independently of the process of S37, so that the communication control apparatus 5 receives the field-of-view information. The user ID transmitted at S38 is the user ID of the participant A.

The reception date and time acquired at S38 is the date and time when the reception unit 92 of the communication terminal 9a receives a user operation for changing the angle of view from the participant A.

At S39, the process that is substantially the same as the process of S37 is also performed at the communication terminal 9b, independently of the process of S37 and S3 8, so that the communication control apparatus 5 receives the field-of-view information. The user ID transmitted at S39 is the user ID of the participant B. The reception date and time acquired at S39 is the date and time when the reception unit 92 of the communication terminal 9b receives a user operation for changing the angle of view from the participant B.

As described above, when the predetermined-area image is changed, for example, from the image of FIG. 6B to the image of FIG. 6D, at the communication terminal 7, the communication control apparatus 5 may store information regarding the predetermined-area image of FIG. 6B, which is the predetermined area viewed and paid attention by the organizer X. Similarly, the communication control apparatus 5 may store information regarding the predetermined area that is viewed and paid attention by the participant A at the communication terminal 9a, and the predetermined area that is viewed and paid attention by the participant B at the communication terminal 9b. The processes performed at S37 to S39 may be collectively executed on the communication control apparatus 5 at the end of the recording.

In FIG. 19, when a mode for fixing a display content (display content lock mode) is selected, only a particular communication terminal (for example, the communication terminal 9a) that is selected as the communication terminal for sharing the display content, transmits the field-of-view information (including the user ID of the participant A) to the communication control apparatus 5. The predetermined-area image, which is displayed at the communication terminal 9a, is displayed at the communication terminals 7 and 9b.

Process for Stopping Image Recording and Sound Recording in Communication System

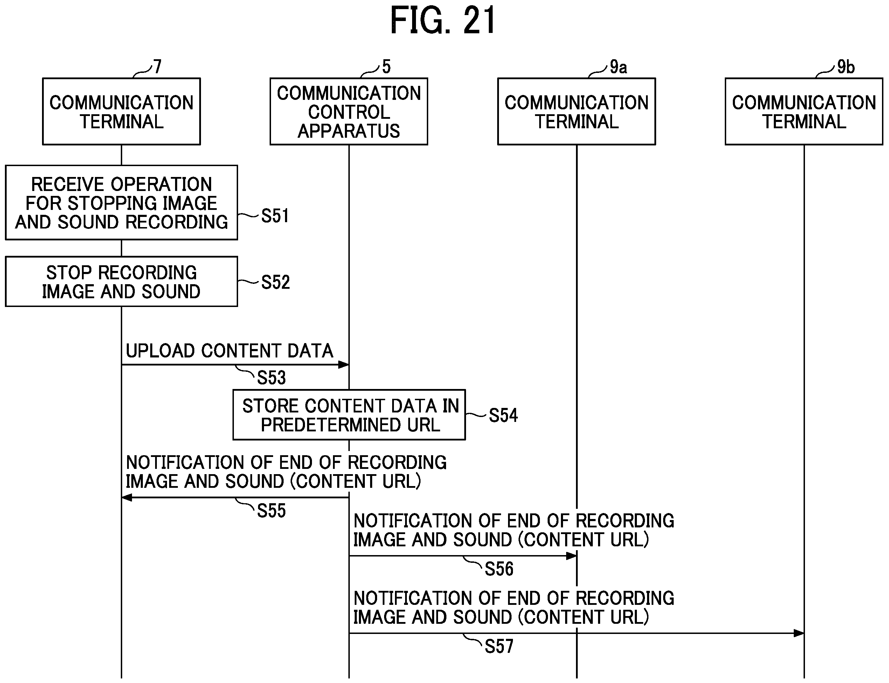

A process for stopping image recording and sound recording, performed by the communication system 1, is described below with reference to FIG. 21. FIG. 21 is a sequence diagram illustrating the process for stopping image recording and sound recording, performed by the communication system 1.

At S51, at the communication terminal 7 of the organizer X, the reception unit 72 receives an operation for stopping recording of images and sounds from the organizer X.

At S52, the storing/reading unit 79 stops recording images and sounds, which are content data.

At S53, the communication unit 71 transmits the content data, which are the recorded images and sounds, to the communication control apparatus 5, so that the content data is uploaded to the storage location indicated by the content URL received at S33. The content data includes times (timestamps) each indicating a time when the image and the sound are recorded, from the start to the end of the recording. Accordingly, the communication unit 51 of the communication control apparatus 5 receives the content data. The time stamp is the same as the date and time of image and sound capturing illustrated in FIG. 18.

At S54, the storing/reading unit 59 of the communication control apparatus 5 stores the content data and the timestamps in the storage location indicated by the content URL. The storing/reading unit 59 converts the timestamps (the dates and times of image and sound capturing) into elapsed playback times, based on the total recording time of the content data of which the recording is stopped, and stores the timestamps and the elapsed playback times in association with each other.

At S55, the communication unit 51 transmits a notification indicating the end of the image recording and sound recording (end notification) to the communication terminal 7. The end notification includes information indicating the content URL where the content data is stored. Accordingly, the communication unit 71 of the communication terminal 7 receives the notification indicating the end of the image recording and sound recording.

At S56, similarly, the communication unit 51 transmits a notification indicating the end of the image recording and sound recording (end notification) to the communication terminal 9a. The end notification includes information indicating the content URL where the content data is stored. Accordingly, the communication unit 91 of the communication terminal 9a receives the notification indicating the end of the image recording and sound recording.

At S57, similarly, the communication unit 51 transmits a notification indicating the end of the image recording and sound recording (end notification) to the communication terminal 9b. The end notification includes information indicating the content URL where the content data is stored. Accordingly, the communication unit 91 of the communication terminal 9b receives the notification indicating the end of the image recording and sound recording.

At the process of S55, the end notification may not include the content URL.

Process for Playing back Recorded Image and Recorded Sound in Communication System

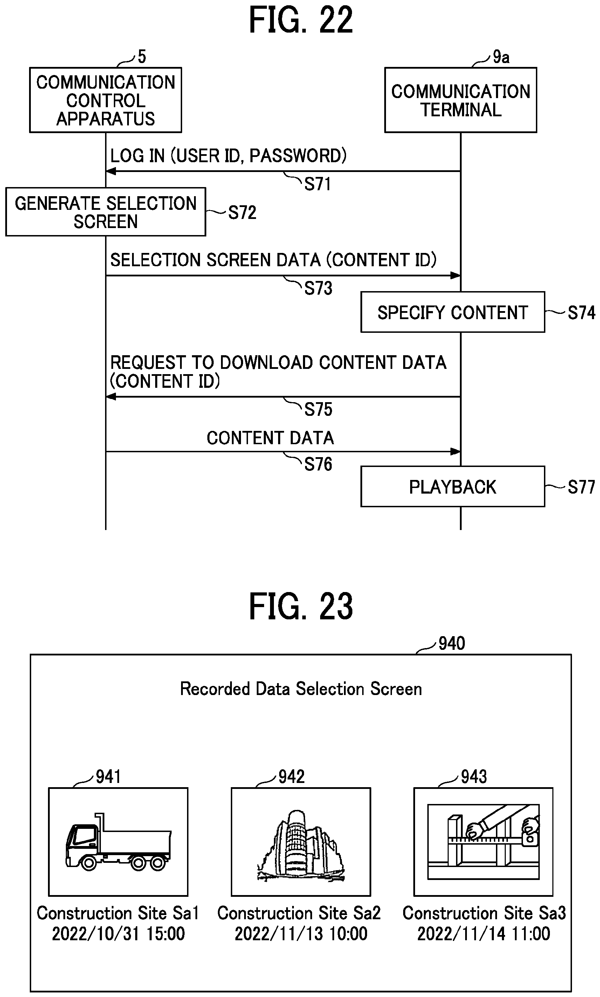

A process for playing back recorded images and recorded sounds in the communication system 1 is described below with reference to FIGs. 22 to 28. FIG. 22 is a sequence diagram illustrating the process of playing back the recorded images and recorded sounds, performed by the communication system 1. FIG. 23 is a diagram illustrating a recorded data selection screen. In this example, the participant A uses the communication terminal 9a to playback recorded content data. Alternatively, the organizer X may playback recorded content data using the communication terminal 7, or the participant B may playback recorded content data using the communication terminal 9b.

At S71, when the reception unit 92 of the communication terminal 9a receives a login operation of inputting a user ID (the participant ID of the participant A) and a password from the participant A, the communication unit 91 transmits a login request to the communication control apparatus 5. The request includes the user ID and password of the participant A. At the communication control apparatus 5, the communication unit 51 receives the login request, and the authentication unit 55 performs authentication by referring to the user/device management DB (see FIG. 14). The following description is given assuming that the participant A is determined to be an authorized accessor by the login authentication.

At S72, the generation unit 53 of the communication control apparatus 5 generates a recorded data selection screen 940 as illustrated in FIG. 23. The storing/reading unit 59 searches the virtual room management DB 5002 (see FIG. 15) using the user ID (in the example, the participant ID of the participant A) received at S71 as a search key, and reads all the corresponding virtual room IDs, virtual room names, and content URLs. The generation unit 53 generates thumbnails 941, 942, and 943 using images of the content data (with timestamps) stored in the storage locations indicated by the content URLs. Thus, the generation unit 53 adds, for each thumbnail, a virtual room name, such as "construction site Sal", and a recording time indicating a predetermined time (for example, a recording start time) of the timestamp such as "2022/10/31 15:00".

At S73, the communication unit 51 transmits data of the selection screen generated at S72 to the communication terminal 9a. Each thumbnail in the selection screen data includes a content ID for identifying a wide-field image used as the source for the thumbnail. The communication unit 91 of the communication terminal 9a receives the selection screen data.

At S74, the display control unit 94 of the communication terminal 9a displays the recorded data selection screen 940 as illustrated in FIG. 23 on the display 507 of the communication terminal 9a. The reception unit 92 receives an operation for specifying (selecting) a particular thumbnail from the participant A. The following description is given assuming that the thumbnail 941 is specified (selected).

At S75, the communication unit 71 transmits a request to download the content data used as the source for the selected thumbnail 941 to the communication control apparatus 5. This request includes the content ID associated with the thumbnail 941. Accordingly, the communication unit 51 of the communication control apparatus 5 receives the request to download the content data.

At S76, the storing/reading unit 59 of the communication control apparatus 5 searches the virtual room management DB (see FIG. 15) using the content ID received at S75 as a search key. The content data also includes position information where the image capturing device 10 performs image capturing. The storing/reading unit 59 searches the three-dimensional image management DB 5003 (see FIG. 16 or FIG. 17) using the three-dimensional image ID, which is associated with the content ID received at S75 in the virtual room management DB 5002 (see FIG. 15), as a search key. The storing/reading unit 59 reads the model IDs and the parameters of the position information (see FIG. 16), or the part numbers and the parameters of the position information (see FIG. 17) associated with the three-dimensional ID.

The communication unit 51 transmits the three-dimensional image data along with the requested content data to the communication terminal 9a. Accordingly, the communication unit 91 of the communication terminal 9a receives the content data and the three-dimensional image data.

At S77, the communication terminal 9a performs a playback process. The display control unit 94 of the communication terminal 9a displays a screen including the images that are recorded at S36 on the display 507 of the communication terminal 9a. The sound input/output control unit 95 outputs the sounds recorded at S36 through the speaker 512 of the communication terminal 9a.

Details of Screen Display Process (Registration Process)

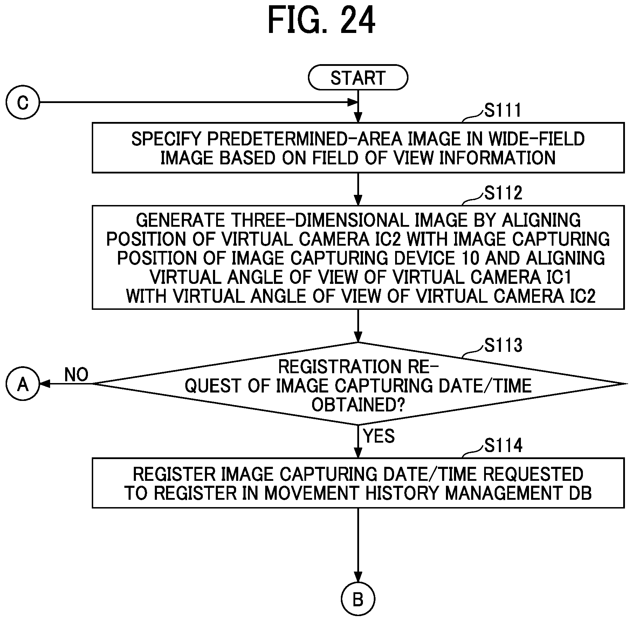

A process to be performed in the display content lock mode is described with reference to FIGs. 24 to 31. The following describes the case where the content is fixed to the content viewed at the communication terminal 9a. Specifically, of the processes S13 to S15 of FIG. 19, the process of S14 is described. When the participant A operates the communication terminal 9a, the reception unit 92 receives the operation, and the communication unit 91 transmits operation information indicating the content of the operation to the communication control apparatus 5. Accordingly, at the communication control apparatus 5, the communication unit 51, which serves as the acquiring unit, acquires the operation information, and the generation unit 53 generates a screen 600 based on the content of the operation that is indicated by the operation information. The communication unit 51 transmits data of the screen 600 to the communication terminal 9a. The communication unit 91 of the communication terminal 9a receives the data of the screen 600. The display control unit 94 of the communication terminal 9a displays the screen 600, for example, on the display 507. In this example, the communication control apparatus 5 functions as an information processing apparatus.

The communication unit 91 of the communication terminal 9a may receive data used for generating the screen 600 from the communication control apparatus 5. The reception unit 92, which serves as the acquiring unit, may acquire the operation information indicating the content of the operation performed by the participant A. In this case, the generation unit 93 of the communication terminal 9a generates the screen 600 based on the data and the operation information. In this example, the communication terminal 9a functions as an information processing apparatus. Each of the communication terminals 7 and 9b can perform substantially the same process or have substantially the same functions as the communication terminal 9a.

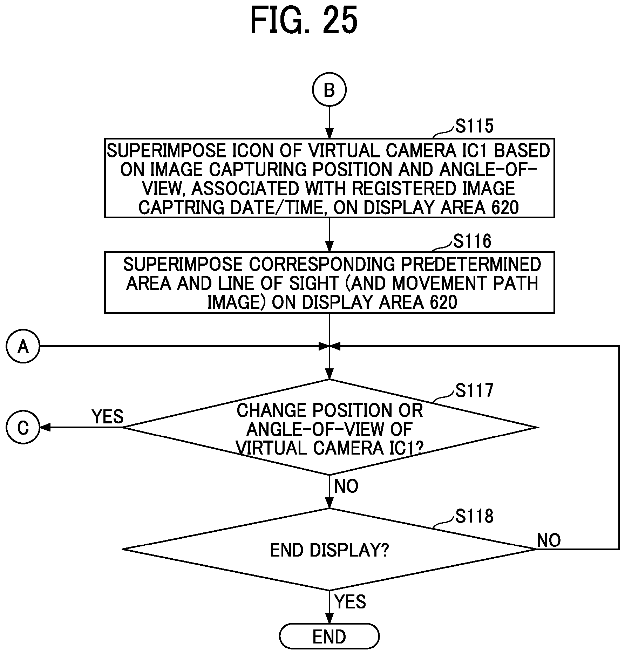

A process for generating the screen 600 to be displayed on the display 507 of the communication terminal 9a, performed by the communication control apparatus 5, is described below. At S13 and S15, the communication control apparatus 5 performs the same process as that of S14, except that the screen is displayed at a different communication terminal (the communication terminal 7 or 9b). FIGs. 24 and 25 illustrate a flowchart of the operation performed by the communication control apparatus 5, in the screen display process.

The generation unit 53 of the communication control apparatus 5 generates the screen 600 to be displayed by the communication terminal 9a as illustrated in FIG. 26. FIG. 26 is a diagram illustrating an example of an initial display screen displayed on the communication terminal 9a. The screen 600 includes the display area 610 and the display area 620. The display area 610 is an example of a first captured image display area. The display area 620 is an example of a three-dimensional image area. In FIG. 26, the display area 610 and the display area 620 are displayed simultaneously in the same size on the screen 600. Alternatively, the display area 610 and the display area 620 may be displayed simultaneously in different sizes, or one of the display area 610 and the display area 620 may be displayed by switching by the selection of the participant A. Alternatively, the screen 600 may be divided into a plurality of sections. For example, the display area 610 may be displayed on one of two displays, and the display area 620 may be displayed on the other one of the two displays.

The display area 610 displays a predetermined-area image (see FIG. 6B), which is a predetermined area of the wide-field image (see FIG. 6A). The wide-field image is an example of the captured image that is obtained by the image capturing device 10 at the site Sa by capturing an image of a target object such as a desk, a pillar, or a window.

When the captured image is not the curved image such as the wide-field image, the display area 610 displays a predetermined-area image, which represents a predetermined area that is the same area as that of the imaging area of the captured image.

The display area 620 displays the three-dimensional image that includes a three-dimensional model representing the shape of a target object in three dimensions. The three-dimensional image further includes the coordinates (an example of the second coordinates) corresponding to the coordinates indicating the position of the target object in the wide-field image (an example of the first coordinates). The display area 620 displays a part or all of the three-dimensional image.

As described with reference to FIG. 11, the image capturing position that is the position of the image capturing device 10 is associated with the absolute position on the earth. As described with reference to FIGs. 16 and 17, all coordinates in the three-dimensional image including the three-dimensional models and parts managed in the three-dimensional image management DB 5003 are also associated with the absolute position on the earth.

As alignment processing for the wide-field image and the three-dimensional image, the processing unit 54 associates, for example, first coordinates in the wide-field image and second coordinates in the three-dimensional image. The first coordinates indicate, as a first position, the image capturing position in the wide-field image of the content data received at the communication control apparatus 5 at S12 (or S12d). The second coordinates indicate, as a second position, the position in the three-dimensional image having the same absolute position as the first coordinates. The coordinates are an example of the position information.

As another example of alignment processing, the processing unit 54 may associate the coordinates indicating the first position in the wide-field image with the coordinates indicating the second position in the three-dimensional image by image processing such as matching features of the edges or texture of the wide-field image and the three-dimensional image, without using the absolute position on the earth (including indoor spaces) or in order to complement the absolute position.

As described above, the generation unit 53 generates the screen 600 including the display area 610 and the display area 620. The display area 610 displays the predetermined-area image, which represents a predetermined area of the wide-field image. The display area 620 displays at least a part of the three-dimensional image in which the second position (second coordinates) is associated with the first position (first coordinates) in the wide-field image by the processing unit 54.

When the three-dimensional image management DB 5003 illustrated in FIG. 16 or 17 manages, for example, a three-dimensional point cloud, a mesh object, or a textured mesh object instead of the three-dimensional model, the display area 620 displays at least a part of a three-dimensional image including the three-dimensional point cloud, the mesh object, or the textured mesh object as a three-dimensional area corresponding to a target object included in a wide-field image.

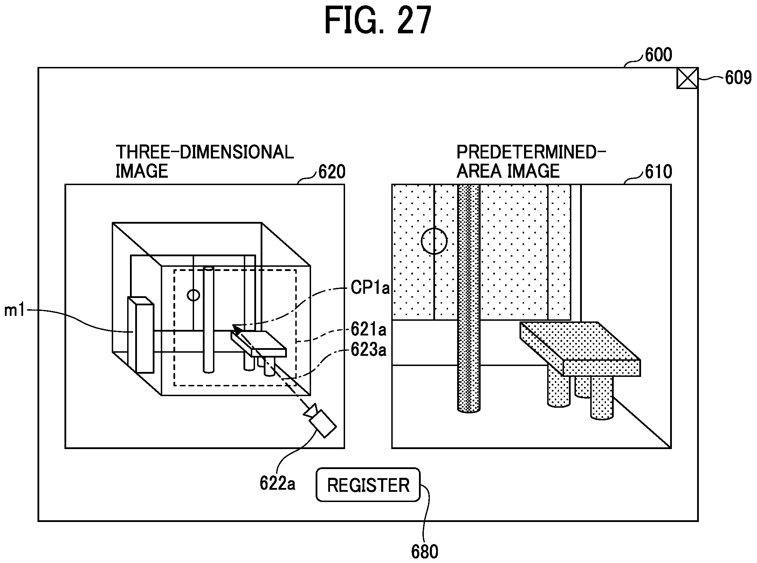

The screen 600 further includes a "register" button 680. As illustrated in FIG. 27, the "register" button 680 is pressed to display the icon 622a of the virtual camera IC1 in the display area 620 at a position corresponding to the image capturing position of the image capturing device 10. The virtual camera IC1 has an imaging area, which is determined by an angle of view (or field-of-view information) for specifying a predetermined-area of the predetermined-area image being displayed in the display area 610.

The screen 600 includes a close button 609 to be pressed to close the screen 600.

The display contents of the screen 600 are described in detail below. The virtual camera IC1 is used to specify the predetermined-area image displayed in the display area 610 (see FIG. 8). The virtual camera IC2 described below is used to specify the three-dimensional image displayed in the display area 620.

At S111, the generation unit 53 of the communication control apparatus 5 specifies, in the wide-field image of the content data received at the communication unit 51, a predetermined-area image to be displayed in the display area 610 as illustrated in FIG. 26, based on the field-of-view information. The field-of-view information indicates a virtual angle of view of the virtual camera IC1 previously set.

At S112, the processing unit 54 aligns the position of the virtual camera IC2 with the image capturing position included in the wide-field image obtained by the image capturing device 10. The processing unit 54 further aligns the virtual angle of view of the virtual camera IC2 (an example of a second angle of view) with the virtual angle of view of the virtual camera IC1 previously set (an example of a first angle of view). Accordingly, the generation unit 53 generates the three-dimensional image to be displayed in the display area 620.

At S113, the communication unit 51 determines whether a registration request for registering the date and time of image capturing is received from the communication unit 91, based on whether the "register" button 680 has been pressed using the cursor c1 at the communication terminal 9a.

When the registration request is received (YES at S113), at S114, the processing unit 54 registers the date and time of image capturing, which is requested to be registered, to the movement history management DB 5004. The processing unit 54 registers (stores) a flag corresponding to the registration request in the "registered" field illustrated in FIG. 18. The date and time when the registration request is received is registered as the date and time of image and sound capturing.

As described above with reference to FIG. 18, the movement history management DB 5004 stores, for each content ID, the date and time of image and sound capturing, the image capturing position, and the field-of-view information in association as data items to be managed.

As described with reference to FIG. 15, the virtual room management DB 5002 stores, for each virtual room, the content ID and the content URL in association. The content URL is storage location information of content data including wide-field images and sounds.

The image capturing position, the field-of-view information, the wide-field image, and the sound (voice) text are associated with the registered date and time of image and sound capturing.

The field-of-view information is information for specifying the predetermined area, which corresponds to the predetermined-area image displayed on the communication terminal 9. Thus, the image capturing position, the predetermined-area image, and the sound (voice) text are associated with the registered date and time of image and sound capturing.

At S115, as illustrated in FIG. 27, the generation unit 53 superimposes the icon 622a of the virtual camera IC1 at a position corresponding to the image capturing position in the display area 620, based on the image capturing position and the angle of view that are associated with the date and time of image and sound capturing that is registered at S 114. FIG. 27 is a diagram illustrating a screen in which the corresponding predetermined area, the icon of the virtual camera IC1, and the line of sight of the virtual camera IC1 are displayed in the display area 620.

At S116, the generation unit 53 superimposes a corresponding predetermined area 621a, which corresponds to the angle of view of the virtual camera IC1, in the display area 620 as illustrated in FIG. 27. FIG. 27 is a diagram illustrating a screen displayed at the communication terminal 9a, which includes the icon of the virtual camera IC1, the corresponding predetermined area, and the line of sight of the virtual camera IC1, each being superimposed on the display area 620. The corresponding predetermined area 621a is an area in the display area 620, which corresponds to the predetermined area of the predetermined-area image being displayed in the display area 610. In FIG. 27, the corresponding predetermined area 621a is indicated by a broken line. The corresponding predetermined area 621a may be displayed in any other display mode. Other examples of the display mode include a broken line and a solid line in any color. Further, the thickness of the broken line and the solid line may be different from any other line in the display area 610.

The generation unit 53 superimposes the icon 622a of the virtual camera IC1 on the display area 620 to indicate a position corresponding to the image capturing position of the image capturing device 10. The icon 622a is placed, so that the virtual camera IC1 is directed to a center point CP1a of the corresponding predetermined area 621a. The icon 622a is an example of a schematic diagram (image) of the virtual camera IC1. The schematic diagram may include characters such as "camera" or a figure including the characters, in addition to the icon.

Further, the generation unit 53 superimposes a line 623a on the display area 620 to indicate the line of sight of the virtual camera IC1 from the icon 622a towards the center point CP1a of the corresponding predetermined area 621a. The line 623a may be a solid line or a broken line or may be displayed with a thickness or color different from those of other lines.

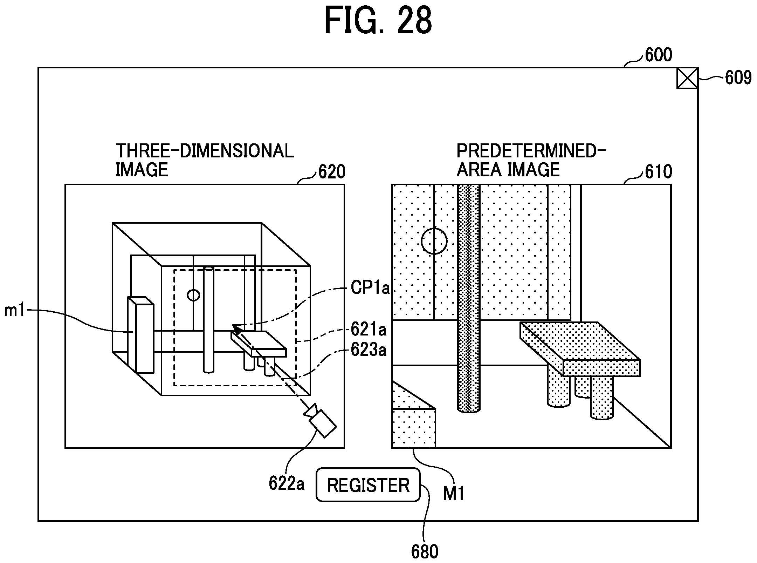

FIG. 28 is a diagram of a screen displayed at the communication terminal 9a, which illustrates a change in the target object, when the target object is being displayed at the same image capturing position with the same angle of view. As illustrated in FIG. 28, the display area 610, which displays the captured image in real-time, displays an article M1 as the article M1 moves. The article M was not initially displayed on the display area 610 as the article M was placed on the left.

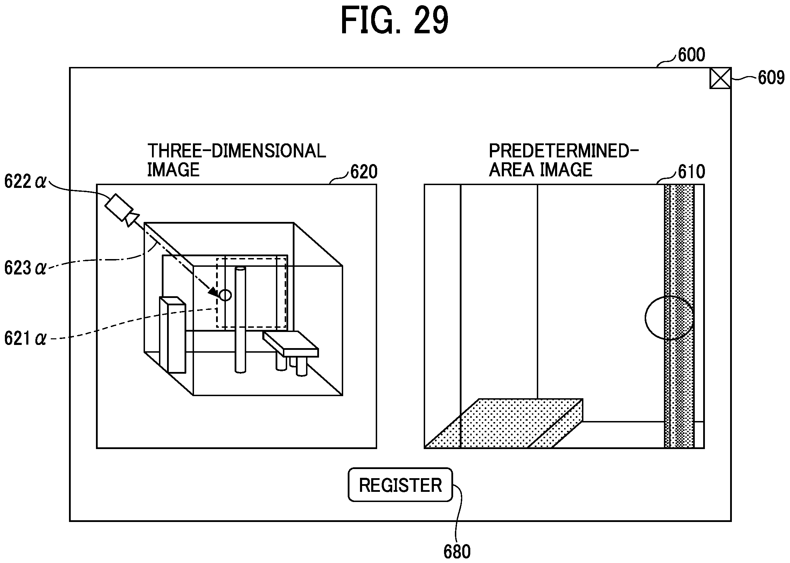

FIG. 29 is another diagram illustrating a screen displayed at the communication terminal 9a, which includes the icon of the virtual camera IC1, the corresponding predetermined area, and the line of sight of the virtual camera IC1, each being superimposed on the display area 620. As illustrated in FIG. 29, as the image capturing position of the image capturing device 10 changes, the contents displayed in the display areas 610 and 620 also change. The screen 600 of FIG. 29 includes a corresponding predetermined area $621\alpha$, an icon $622\alpha$ of the virtual camera IC1, and a line $623\alpha$ indicating the line of sight of the virtual camera IC1.

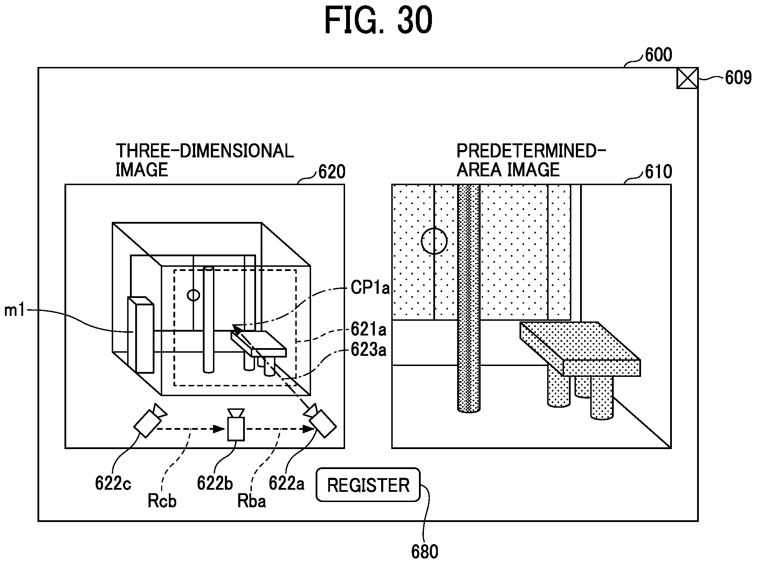

After the process of S116, or when the registration request is not received at S113 (NO at S113), at S117, the generation unit 53 determines whether the position or the angle of view of the virtual camera IC1 in the display area 610 has been changed (see FIG. 6C). For example, when the participant A performs an operation of changing the predetermined-area image in the display area 610 illustrated in FIG. 27, the reception unit 92 receives the changed angle of view, and the communication unit 91 transmits field-of-view information indicating the changed angle of view to the communication control apparatus 5. When the communication unit 51 receives the field-of-view information indicating the changed angle of view, the generation unit 53 determines that the angle of view of the virtual camera IC1 has been changed. When the position or the angle of view of the virtual camera IC1 is changed (YES at S117), the operation returns to S111. Through repeating the process of S111 to S116, even when the "register" button 680 is pressed at different times, the communication unit 51 accepts a registration request each time the "register" button 680 is pressed. The processing unit 54 registers a flag corresponding to each registration request to the movement history management DB 5004. Further, as illustrated in FIG. 30, the generation unit 53 generates the screen 600, by superimposing icons 622c, 622b, and 622a of the respective virtual cameras IC1 on the display area 620. The generation unit 53 further superimposes movement path images Rcb and Rba that indicate the movement path of the image capturing device 10 on the display area 620.

FIG. 30 is a diagram illustrating the screen 600 including the movement path of the virtual camera IC1, which is represented by the icons each indicating a particular position and an angle of view of the image capturing device 10 at the registered date and time of image capturing. The screen 600 further includes the corresponding display area and the line indicating the line of sight, which are the latest. In FIG. 30, the icon 622b is superimposed on the display area 620 when the "register" button 680 is pressed immediately before the icon 622a is superimposed. The icon 622c is superimposed on the display area 620 when the "register" button 680 is pressed immediately before the icon 622b is superimposed.

In a case where the respective image capturing positions of the virtual camera IC1 are the same, the generation unit 53 may superimpose one icon 622 of the virtual camera IC1 in the display area 620, such that the icon 622 is associated with a list of different dates and times of image capturing.

At S118, when the reception unit 92 receives an instruction to end display of the screen 600, for example, by pressing of the close button 609 by the participant A (YES at S1 18), the display control unit 94 stops displaying the screen 600. When the reception unit 92 does not receive an instruction to end display of the screen 600 (NO at S118), the operation returns to S117. The processes of FIGs. 24 and 25 are continued until the transmission of the captured image by the communication control apparatus 5, performed at S14 of FIG. 19, ends.

Another Example of Registration Process

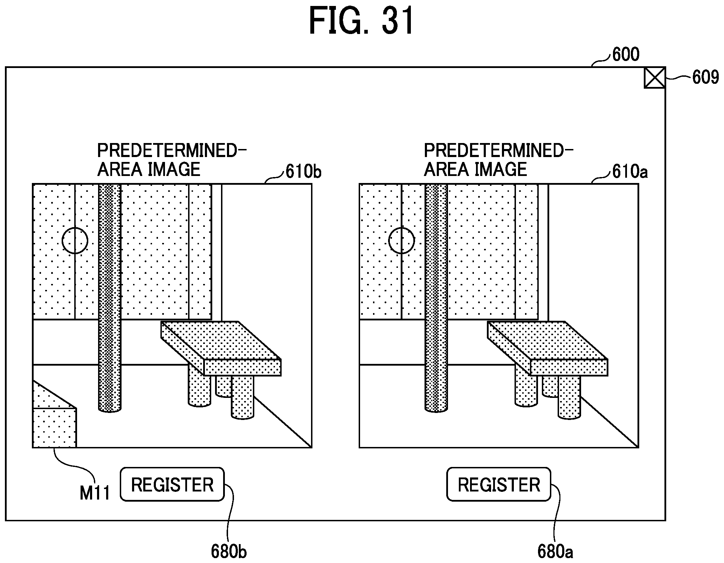

In the above example, the predetermined-area image, which represents a predetermined area of the currently-captured image, is displayed, but the present disclosure is not limited to this example. In another example, as illustrated in FIG. 31, different predetermined-area images respectively representing different areas of the same captured image, which have been captured at different dates or times, may be displayed. FIG. 31 is a diagram illustrating another example screen 600, displayed by the communication terminal 9a when reproducing the predetermined-area images having been recorded.

The generation unit 53 generates the screen 600 including a display area 610a and a display area 610b. The display area 610a displays a first predetermined-area image, which is a predetermined area of the captured image corresponding to a first image capturing date and time. The captured image is assumed to be aligned with the non-displayed three-dimensional image. The display area 610b displays a second predetermined-area image, which is a predetermined area of the same captured image but corresponding to a second image capturing date and time. In FIG. 31, the predetermined-area image displayed in the display area 610b is captured later than the predetermined-area image displayed in the display area 610a. As illustrated in the display area 610b, it is apparent that the location of an object M11 has changed.

In FIG. 31, the "register" buttons 680a and 680b are displayed below the display areas 610a and 610b, respectively. The "register" buttons 680a and 680b provide the functions that are substantially similar to those of the "register" button 680 described above.

The communication unit 51 may acquire a registration request, which instructs to superimpose the icon of the virtual camera IC1 on the three-dimensional image display area, at a first image capturing position corresponding to the first image capturing date and time or at a second image capturing position corresponding to the second image capturing date and time. The three-dimensional image display area is at least a part of the three-dimensional image being displayed. In response to the registration request, the processing unit 54 registers a flag in the "registered" field of the movement history management DB 5004 (see FIG. 18). The imaging area of the virtual camera IC1 is determined by an angle of view representing the first predetermined-area image or the second predetermined-area image being displayed.

Details of Screen Display Process (After Registration)

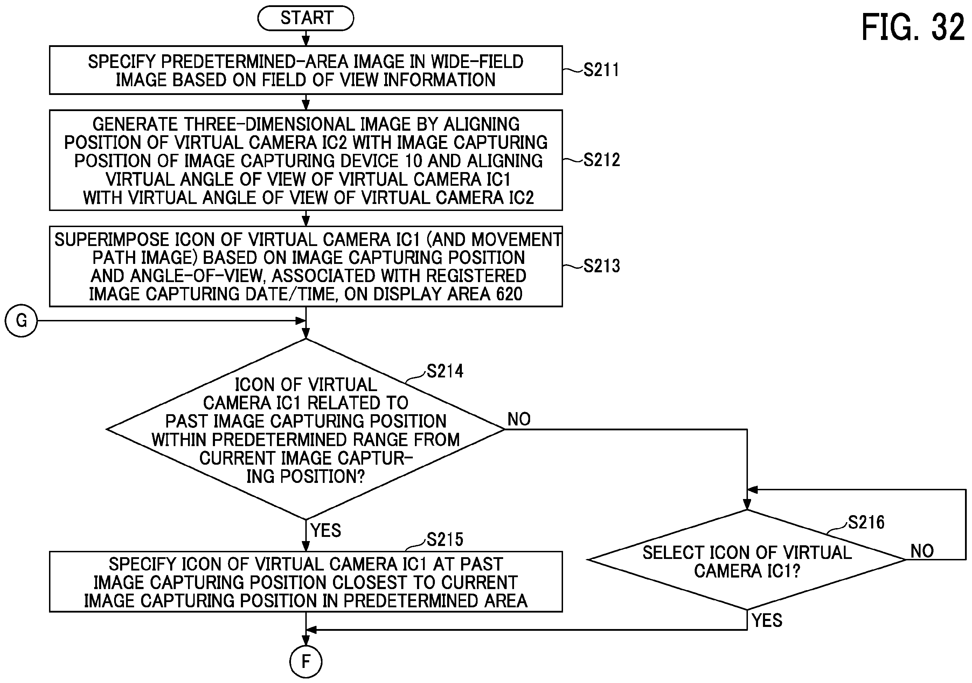

The description of the process to be performed in the display content lock mode continues with reference to FIGs. 32 to 35. The following describes the case where the content is fixed to the content viewed at the communication terminal 9a. Specifically, of the processes S13 to S15 of FIG. 19, the process of displaying the screen after registration at S14 is described. In FIGs. 34 to 35, the same reference numerals are given to the components in FIGs. 26 to 32, which operate or function in the substantially similar manner. When the participant A operates the communication terminal 9a, the reception unit 92 receives the operation, and the communication unit 91 transmits operation information indicating the content of the operation to the communication control apparatus 5.

Accordingly, at the communication control apparatus 5, the communication unit 51, which serves as the acquiring unit, acquires the operation information, and the generation unit 53 generates a screen 601 based on the content of the operation that is indicated by the operation information. The communication unit 51 transmits data of the screen 601 to the communication terminal 9a. The communication unit 91 of the communication terminal 9a receives the data of the screen 601. The display control unit 94 of the communication terminal 9a displays the screen 601, for example, on the display 507. In this example, the communication control apparatus 5 functions as an information processing apparatus.

A process for generating the screen 601 to be displayed on the display 507 of the communication terminal 9a, performed by the communication control apparatus 5, is described below. At S13 and S15, the communication control apparatus 5 performs the same process as that of S14, except that the screen is displayed at a different communication terminal (the communication terminal 7 or 9b). FIGs. 32 to 33 are flowcharts illustrating the operation of the communication control apparatus in a screen display process, after registering the dates and times of image capturing.

The generation unit 53 of the communication control apparatus 5 generates a screen 601 to be displayed by the communication terminal 9a as illustrated in FIG. 34. FIG. 34 is a diagram illustrating a screen for displaying the current predetermined-area image at the communication terminal 9a, after registering the date and time of image capturing. The screen 601 includes the display area 610, the display area 620, and a display area 630. The display area 610 is an example of a first captured image display area. The display area 620 is an example of a three-dimensional image area. The display area 630 is an example of a second captured image display area. In FIG. 34, the display area 610, the display area 620, and the display area 630 are displayed simultaneously in the same size on the screen 601. Alternatively, the display area 610, the display area 620, and the display area 630 may be displayed simultaneously in different sizes. Alternatively, one of the display area 610, the display area 620, and the display area 630 may be selectively displayed according to the selection made by the participant A. Alternatively, the display area 610, the display area 620, and the display area 630 may be displayed, respectively, on a first display, a second display, and a third display.

The display area 610 displays a predetermined-area image (see FIG. 6B), which is a predetermined area of the current wide-field image (see FIG. 6A). The current wide-field image is an example of the current image that is currently obtained by the image capturing device 10 by capturing an image of a target object.

The display area 620 displays a part of or all of the three-dimensional image that includes a three-dimensional model representing the shape of the target object (for example, a table or a pillar) in three dimensions. In the three-dimensional image, the coordinates (an example of the first coordinates) of the wide-field image and the coordinates (an example of the second coordinates) are associated with each other.

The display area 630 displays a predetermined-area image (see FIG. 6B), which is a predetermined area of the past wide-field image (see FIG. 6A). The past wide-field image is an example of the past image that is previously obtained by the image capturing device 10 by capturing an image of a target object.

When the captured image is not the curved image such as the wide-field image, the display areas 610 and 630 each display a predetermined-area image, which represents a predetermined area that is the same area as that of the imaging area of the captured image.

The processing unit 54 aligns the positions of the display areas 610, 620, and 630 as described above. The generation unit 53 generates the screen 601 including the display area 610, the display area 620, and the display area 630. The display area 610 displays the predetermined-area image, which represents a predetermined area of the current wide-field image. The display area 620 displays at least a part of the three-dimensional image in which the second position (second coordinates) is associated with the first position (first coordinates) in the wide-field image. The display area 630 displays the predetermined-area image, which represents a predetermined area of the past wide-field image, in which the third position (third coordinates) is associated with the first position (first coordinates).

The screen 601 further includes the "register" button 680. The "register" button 680 operates or functions in a substantially similar manner as the "register" button 680 illustrated in FIG. 26.

The display contents of the screen 601 are described in detail below. The virtual camera IC1 is used to specify the predetermined-area image displayed in each of the display areas 610 and 630 (see FIG. 8). The virtual camera IC2 described below is used to specify the three-dimensional image displayed in the display area 620.

At S211, the generation unit 53 of the communication control apparatus 5 specifies, in the wide-field image of the content data received at the communication unit 51, the current predetermined-area image to be displayed in the display area 610 as illustrated in FIG. 34, based on the field-of-view information. The field-of-view information indicates a virtual angle of view of the virtual camera IC1 previously set.

At S212, the processing unit 54 aligns the position of the virtual camera IC2 with the image capturing position included in the wide-field image (content data) obtained by the image capturing device 10. The processing unit 54 further aligns the virtual angle of view of the virtual camera IC2 (an example of a second angle of view) with the virtual angle of view of the virtual camera IC1 previously set (an example of a first angle of view). Accordingly, the generation unit 53 generates the three-dimensional image to be displayed in the display area 620.

As illustrated in FIG. 34, when the "register" button 680 is pressed, the same processes as the above-described processes of S113 to S116 are performed. Accordingly, the generation unit 53 superimposes a corresponding predetermined area 621A on the display area 620 to indicate the current image capturing position. The generation unit 53 further superimposes a line 623A, which represents a line of sight of the virtual camera IC1 with respect to the center point CP1A of the corresponding predetermined area 621A. An icon 622A is an example of an image representing the first virtual camera, such as the virtual camera IC1.

At S213, as illustrated in FIG. 34, the generation unit 53 superimposes icons 622a, 622b, and 622c of the virtual camera IC1 in the display area 620, based on the image capturing positions and the angle of view, which are associated with the registered image capturing dates and times. The icons 622a to 622c are each an example of an image representing a past image capturing position, or an example of an image indicating the second virtual camera. In the case where multiple icons are displayed, the generation unit 53 displays the movement path images Rba and Rcb between the icons of the virtual camera IC1.

In a case where the respective image capturing positions of the virtual camera IC1 are the same, the generation unit 53 superimposes one icon 622 of the virtual camera IC1 in the display area 620, such that the icon 622 is associated with a list of different dates and times of image capturing.

At S214, the generation unit 53 determines whether there is any icon of the virtual camera IC1, which represent the past image capturing position, within a predetermined range from the current image capturing position. The predetermined range is, for example, 3 meters when an absolute position is assumed.

When it is determined that one or more icons of the virtual camera IC1 representing the past image capturing positions are present within the predetermined range from the current image capturing position (YES at S214), at S215, the generation unit 53 specifies one icon corresponding to the past image capturing position, which is closest to the current image capturing position. In FIG. 34, the generation unit 53 specifies, from among the icons 622a, 622b, and 622c of the virtual camera IC1 corresponding to the past image capturing positions, the icon 622a that is closest to the icon 622A of the virtual camera IC1 within the predetermined range.

When it is determined that there is no icon of the virtual camera IC1 representing the past image capturing position within the predetermined range from the current image capturing position (NO at S214), at S216, the communication unit 51 determines whether an instruction to select (or designate) one icon of the virtual camera IC1, from among the icons of the virtual camera IC1 corresponding to the past image capturing positions, has been received from the participant A. When it is determined that the communication unit 51 has not received the instruction to select (No at S216), the communication unit 51 repeats this process of determining whether the selection has been received.

As described in the process of S213, the generation unit 53 may superimpose one icon 622 of the virtual camera IC1 on the display area 620, such that the icon 622 is associated with a list of different image capturing dates and times. In this case, the communication unit 51 determines whether an instruction to select (or designate) a specific past image capturing date and time, from among the past image capturing dates and times, has been received from the participant A.

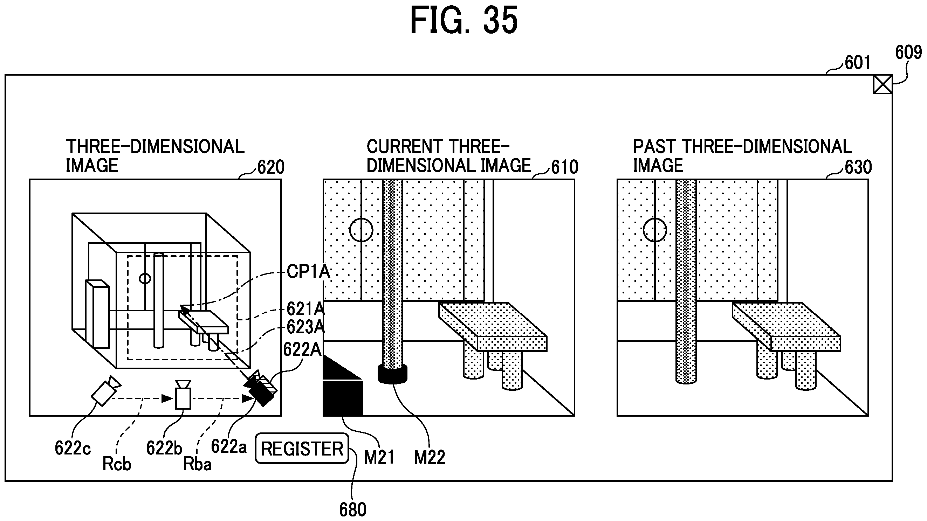

After the process of S215 or when the selection is received at S216 (YES at S216), at S217, the generation unit 53 changes a display mode of the specified or selected icon of the virtual camera IC1 that represents the past image capturing position (for example, the icon 622a), as illustrated in FIG. 35. FIG. 35 is a diagram illustrating a screen for additionally displaying the past predetermined-area image at the communication terminal 9a, after registering the image capturing date and time. Examples of the change in display mode of the icon include, but not limited to, the change in shape of the icon, the change in pattern of the icon, and the change in color of the icon. As illustrated in FIG. 35, the generation unit 53 displays the icon 622a, such that the icon 622a is overlaid on the icon 622A. In FIGs. 34 and 35, when the icon 622a indicating the past image capturing position and the icon 622A indicating the current image capturing position are to be superimposed at the same position, the generation unit 53 may change the size of one of the icons 622a and 622A or may superimpose the icons 622a and 622A at slightly different positions.

As described above referring to S116, at S218, the generation unit 53 superimposes, on the display area 620, the corresponding predetermined area 621A to indicate the past image capturing position of the virtual camera IC1. The generation unit 53 further superimposes, on the display area 620, a line 623A, which represents the line of sight of the virtual camera IC1 with respect to the center CP1A of the corresponding predetermined area 621A. The icon 622A represents the virtual camera IC1.

As illustrated in FIG. 35, at S219, the generation unit 53 generates the screen 601 to additionally include a display area 630, which is an example of a second captured image display area. The display area 630 displays a past predetermined-area image, which corresponds to the position indicated by the icon 622a of the virtual camera IC1. The past predetermined-area image is an example of a second predetermined-area image.

At S220, the generation unit 53 determines whether there is any difference between the target object in the current predetermined-area image displayed in the display area 610 and the target object in the past predetermined-area image displayed in the display area 630.

When there is a difference (YES at S220), at S221, the generation unit 53 superimposes a marking image on a portion that is different in the current predetermined-area image, to indicate the part that is different. For example, as illustrated in FIG. 35, the generation unit 53 superimposes marking images M21 and M22, on the different portions of the target objects in the current predetermined-area image. Alternatively, the generation unit 53 may superimpose the marking images on the different portions of the target objects in the past predetermined-area image.

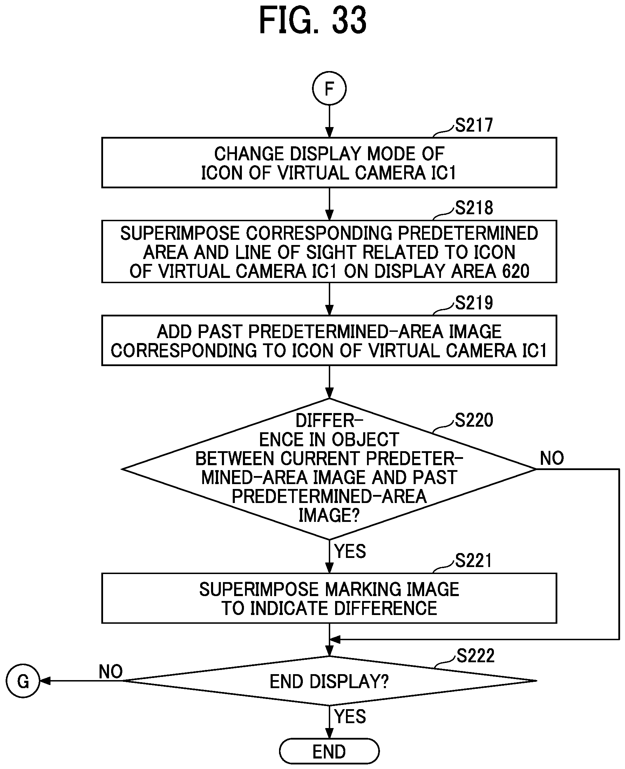

After S221, or when there is no difference (NO at S220), the operation proceeds to S222. At S222, when the reception unit 92 receives an instruction to end display of the screen 601, for example, by pressing of the close button 609 by the participant A ("YES" at S222), the display control unit 94 stops displaying of the screen 601. When the reception unit 92 does not receive an instruction to end display of the screen 601 ("NO" at S222), the operation returns to S214. The processes of FIGs. 32 and 33 are continued until the transmission of the captured image by the communication control apparatus 5, which is performed at S14 of FIG. 19, ends.

As described above, the processing unit 54 associates the first position in a captured image obtained by capturing a target object with the second position in a three-dimensional image including a three-dimensional area corresponding to the target object. The generation unit 53 (or the generation unit 73 or 93) generates the screen 600 including the display area 610 and the display area 620. The display area 610 displays a predetermined-area image, which is the predetermined area of the captured image obtained by capturing the target object. The display area 620 displays at least a part of the three-dimensional image in which the first position in the captured image and the second position are associated with each other by the processing unit 54.

Accordingly, the user, such as the participant A, can recognize what the predetermined-area image captures and where the predetermined-area image is captured by viewing the screen 600. Even if the back of an object is not captured, the user can grasp the state of the back of the object by viewing the screen 600. With generation of an image that complements a captured image obtained by image capturing, user convenience is enhanced.

Further, the movement history management DB 5004 of FIG. 18 stores the image capturing date and time (and the sound collection date and time), the image capturing position, and the angle of view subjected to display in association. When the participant A presses the "register" button 680 while the predetermined-area image is displayed in the display area 610, the processing unit 54 registers the date and time of image and sound capturing, the image capturing position, and the angle of view representing the area for display, in the movement history management DB 5004, with registration of the flag to the "registered" field.

Further, as illustrated in FIG. 27, the generation unit 53 superimposes the icon 622a of the virtual camera IC1 on the display area 620 at a position indicating the image capturing position. The imaging area of the virtual camera IC1 is defined by an angle of view represented by the predetermined-area image being displayed.

Furthermore, as illustrated in FIG. 34, the generation unit 53 displays the icon 622a of the virtual camera IC1 at the image capturing position in the display area 620 of the three-dimensional image, which is previously registered. When the user such as the participant A presses the icon 622a, as illustrated in FIG. 35, the generation unit 53 generates the screen 601, which displays, in the display area 630, a predetermined-area image of a captured image having been captured at the date and time of image capturing, which corresponds to the past image capturing position indicated by the icon 622a. The predetermined-area image being displayed has an angle of view as indicated by the icon 622a.

Accordingly, the participant A can identify the predetermined-area image at a desired image capturing date and time, from among the past captured images, by specifying the image capturing date and time and the angle of view of the past captured image with reference to the position of the icon of the virtual camera IC1.

Each of the functions described above may be implemented by one or more processing circuits or circuitry. The "processing circuit or circuitry" in the specification includes a programmed processor to execute each function by software, such as a processor implemented by an electronic circuit, and devices, such as an application-specific integrated circuit (ASIC), a digital signal processor (DSP), a field-programmable gate array (FPGA), and conventional circuit modules designed to perform the recited functions.

The programs described above may be stored in (non-transitory) recording media such as digital versatile disc-read-only memories (DVD-ROMs), and such (non-transitory) recording media may be distributed in the form of program products to domestic or foreign users.

The number of each of the CPU 111, the CPU 301, and the CPU 501 serving as a processor that is hardware may be a single or multiple.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

According to a first aspect, an information processing apparatus includes a generation unit configured to generate a screen including a captured image display area and a three-dimensional image display area. The captured image display area displays a predetermined-area image representing a predetermined area of a captured image having been obtained by capturing an object with an image capturing device. The three-dimensional image display area displays at least a three-dimensional image aligned with the captured image. The information processing apparatus further includes a processing unit that associates an image capturing position of the captured image and the predetermined-area image. The generation unit generates the screen including an image indicating the image capturing position at the image capturing position within the three-dimensional image display area.

According to a second aspect, the information processing apparatus according to the first aspect further includes an acquiring unit that acquires field-view information indicating a field-of-view representing the predetermined-area of the predetermined-area image. The processing unit associates the field-of-view with the image capturing date and time of the captured image and the image capturing position of the captured image.

According to a third aspect, in the information processing apparatus according to the second aspect, the acquiring unit acquires a registration request, the registration request causing superimposition of an image on the three-dimensional image display area at a position corresponding to the image capturing position, the image representing a virtual camera having the predetermined-area image as an imaging area. The processing unit registers according to the registration request.

According to a fourth aspect, in the information processing apparatus according to the first aspect, the generation unit generates the screen so as to display, in the three-dimensional image display area, a corresponding area corresponding to the predetermined-area of the predetermined-area image displayed in the captured image display area.

According to a fifth aspect, in the information processing apparatus according to the fourth aspect, the generation unit generates the screen so as do display a line image representing a line of sight, from the image representing the virtual camera having the predetermined-area image as the imaging area, to a center point of the predetermined-area image, in the three-dimensional image display area.

According to a sixth aspect, in the information processing apparatus according to the third aspect, the acquiring unit obtains a plurality of the registration requests at different times, during when the predetermined-area image is being displayed in the captured image display area. The processing unit registers according to the plurality of registration requests. The generation unit superimposes a plurality of the images representing a plurality of the virtual cameras, at respective positions corresponding to a plurality of the image capturing positions in the three-dimensional image display area.

According to a seventh aspect, in the information processing apparatus according to the sixth aspect, the generation unit superimposes, on the three-dimensional image display area, a movement path image indicating a movement path of the image capturing device based on the respective positions corresponding to the plurality of image capturing positions.

According to an eight aspect, an information processing apparatus includes a generation unit that generates a screen including a first predetermined-area image and a second predetermined-area image. The first predetermined-area image represents a predetermined area of a captured image at a first image capturing date and time, the captured image being obtained by capturing an object with an image capturing device and being aligned with a three-dimensional image. The second predetermined-area image represents another predetermined area of the captured image at a second image capturing date and time. The information processing apparatus further includes an acquiring unit that obtains a registration request for causing superimposition of an image representing a virtual camera on a three-dimensional image display area including at least the three-dimensional image. The virtual camera may either have the first-predetermined area as the image capturing area, which is superimposed at the first image capturing position corresponding to the first image capturing date and time, or have the second-predetermined area as the image capturing area, which is superimposed at the second image capturing position corresponding to the second image capturing date and time. The information processing apparatus further includes a processing unit that registers according to the registration request.

According to a ninth aspect, a screen generation method includes generating a screen including a captured image display area and a three-dimensional image display area. The captured image display area displays a predetermined-area image representing a predetermined area of a captured image having been obtained by capturing an object with an image capturing device. The three-dimensional image display area displays at least a three-dimensional image aligned with the captured image. The screen generation method further includes associating an image capturing position of the captured image and the predetermined-area image.

According to a tenth aspect, a program causes a computer system to carry out the screen generation method according to the ninth aspect.

According to an eleventh aspect, an information processing system includes an information processing apparatus and a display terminal that communicates with the information processing apparatus. The information processing system includes a generation unit configured to generate a screen including a captured image display area and a three-dimensional image display area. The captured image display area displays a predetermined-area image representing a predetermined area of a captured image having been obtained by capturing an object with an image capturing device. The three-dimensional image display area displays at least a three-dimensional image aligned with the captured image. The information processing system further includes a processing unit that associates an image capturing position of the captured image and the predetermined-area image, and a display control unit that displays, on a display, the screen being generated.

## Claims

1. An information processing apparatus (5) comprising:
a generation unit (53) configured to generate a screen including a first captured image display area displaying a first predetermined-area image, a second captured image display area displaying a second predetermined-area image, and a three-dimensional image display area,

   the first predetermined-area image being a first predetermined area of a first captured image, the first captured image being obtained by capturing an object with an image capturing device (10) at a first image capturing position,
   the three-dimensional image display area displaying at least a part of a three-dimensional image aligned with the first captured image, the three-dimensional image including a position image indicating a second image capturing position of the image capturing device at a specific date and time of image capturing, and
   the second predetermined-area image being a second predetermined area of a second captured image, the second captured image being obtained by capturing the object with the image capturing device (10) at the specific date and time of image capturing that is associated with the second image capturing position indicated by the position image.

2. The information processing apparatus (5) according to claim 1, wherein
the generation unit (53) is configured to superimpose, on the three-dimensional image display area, an image representing a first virtual camera at the first image capturing position, the first virtual camera having an imaging area determined by an angle of view representing the first predetermined-area image being displayed.

3. The information processing apparatus (5) according to claim 1, wherein the position image is an image representing a second virtual camera having an imaging area determined by an angle of view representing the second predetermined-area image, the second predetermined-area image being displayed at the second image capturing position in the three-dimensional image display area.

4. The information processing apparatus (5) according to claim 1, wherein
the generation unit (53) is configured to superimpose a plurality of position images including the position image on the three-dimensional image display area at respective second image capturing positions.

5. The information processing apparatus (5) according to claim 4, wherein
the generation unit (53) is configured to superimpose, on the three-dimensional image display area, a movement path image indicating a movement path of the image capturing device from one of the plurality of the position images to another one of the plurality of the position images.

6. The information processing apparatus (5) according to claim 3, wherein
the generation unit (53) is configured to generate the screen so as to display a corresponding predetermined area in the three-dimensional image display area, the corresponding predetermined area corresponding to the second predetermined area of the second predetermined-area image displayed in the second captured image display area.

7. The information processing apparatus (5) according to claim 6, wherein
the generation unit (53) is configured to generate the screen so as to display a line image indicating a line of sight, from an image of the second virtual camera to a center point of the corresponding predetermined area, in the three-dimensional image display area.

8. The information processing apparatus (5) according to claim 4, wherein

in a case where the plurality of position images representing the respective second image capturing positions are present within a predetermined range from the first image capturing position,
the generation unit (53) is configured to select, from among the plurality of position images, a position image representing the second image capturing position that is closet to the first image capturing position, and cause the screen to include the second captured image display area displaying the second predetermined-area image corresponding to the second image capturing position represented by the selected position image.

9. The information processing apparatus (5) according to claim 4, further comprising:

a reception unit (52) configured to receive an instruction to select a particular position image from among the plurality of position images, and

the generation unit (53) is configured to cause the screen to include the second captured image display area displaying the second predetermined-area image corresponding to the selected position image.

10. The information processing apparatus (5) of claim 8 or 9, wherein
the generation unit (53) is configured to change a display mode of the selected position image.

11. The information processing apparatus (5) according to claim 1, wherein

in a case where the object differs between the first predetermined-area image and the second predetermined-area image,
the generation unit (53) is configured to superimpose, on the first predetermined-area image or the second predetermined-area image, a marking image indicating the difference at a portion of the object that differs.

12. An information processing system comprising:

an information processing apparatus (5) including:

a generation unit (53) is configured to generate a screen including a first captured image display area and a three-dimensional image display area; and
a reception unit (52); and

a display terminal (7, 9) communicably connected with the information processing apparatus and including a display control unit (74, 94) configured to display the screen on a display, wherein the first captured image display area displays a first predetermined-area image being a first predetermined area of a first captured image, the first captured image being obtained by capturing an object with an image capturing device (10) at a first image capturing position, and the three-dimensional image display area displays at least a part of a three-dimensional image aligned with the first captured image, the three-dimensional image including a position image indicating a second image capturing position of the image capturing device at a specific date and time of image capturing, and wherein, in response to receiving a selection of the position image at the reception unit (52), the generation unit (53) is configured to cause the screen to additionally include a second captured image display area including a second predetermined-area image being a second predetermined area of a second captured image, the second captured image being obtained by capturing the object with the image capturing device at the specific date and time of image capturing that is associated with the second image capturing position indicated by the selected position image.

13. A screen generating method comprising:

generating a screen including a first captured image display area and a three-dimensional image display area,

the first captured image display area displaying a first predetermined-area image being a first predetermined area of a first captured image, the first captured image being obtained by capturing an object with an image capturing device at a first image capturing position,
the three-dimensional image display area displaying at least a part of a three-dimensional image aligned with the first captured image, the three-dimensional image including a position image indicating a second image capturing position of the image capturing device at a specific date and time of image capturing;

receiving selection of the position image; and generating the screen to additionally include a second captured image display area including a second predetermined-area image being a second predetermined area of a second captured image, the second captured image being obtained by capturing the object with the image capturing device at the specific date and time of image capturing that is associated with the second image capturing position indicated by the selected position image.

14. A carrier means carrying computer-readable codes for controlling a computer system to carry out the method according to claim 13.

# FIG. 1A

103b    103a

10

# FIG. 1B

103b

115

10

# FIG. 1C

103b    103a

10

EP 4 607 470 A1

FIG. 2

# FIG. 3A

HEMISPHERICAL IMAGE (FRONT)

# FIG. 3B

HEMISPHERICAL IMAGE (BACK)

# FIG. 3C

CAPTURED IMAGE (EQUIRECTANGULAR PROJECTION IMAGE EC)

# FIG. 4A

EQUIRECTANGULAR
PROJECTION IMAGE EC

# FIG. 4B

SPHERICAL IMAGE CE

# FIG. 5

VIRTUAL CAMERA IC1

VIRTUAL CAMERA IC1

SPHERICAL IMAGE CE (SPHERE CS)

PREDETERMINED-AREA IMAGE Q (PREDETERMINED AREA T)

SPHERICAL IMAGE CE (SPHERE CS)

PREDETERMINED-AREA IMAGE Q (PREDETERMINED AREA T)

(FRONT)

(SIDE)

PREDETERMINED-AREA IMAGE Q (PREDETERMINED AREA T)

SPHERICAL IMAGE CE (SPHERE CS)

VIRTUAL CAMERA IC1

(TOP)

EP 4 607 470 A1

# FIG. 6A

VIRTUAL
CAMERA IC1   SPHERE CS

PREDETERMINED-AREA IMAGE Q
(PREDETERMINED AREA T)

# FIG. 6B

# FIG. 6C

VIRTUAL
CAMERA IC1      SPHERE CS

PREDETERMINED-AREA IMAGE Q′
(PREDETERMINED AREA T′)

# FIG. 6D

FIRST

# FIG. 7

# FIG. 8

# FIG. 9

COMMUNICATION SYSTEM 1

COMMUNICATION CONTROL APPARATUS 5
[INFORMATION PROCESSING APPARATUS]

100

COMMUNICATION
NETWORK

SITE Sa

IMAGE
CAPTURING
DEVICE 10

COMMUNICATION
TERMINAL 7
[INFORMATION
PROCESSING
APPARATUS]

COMMUNICATION
TERMINAL 9 (9a,9b)
[INFORMATION
PROCESSING
APPARATUS]

RELAY DEVICE 3

ORGANIZER X

PARTICIPANTS A, B

# FIG. 10

EP 4 607 470 A1

# FIG. 11

ANTENNA 313a

| 305 | 313 | 314 | 316 |
|---|---|---|---|
| CMOS | COMMUNICATION DEVICE | POSITIONING DEVICE | INPUT/OUTPUT I/F |

310

| CPU | ROM | RAM | EEPROM |
|---|---|---|---|
| 301 | 302 | 303 | 304 |

# FIG. 12

CPU 501 · ROM 502 · RAM 503 · SSD 504 · CMOS 511 · POSITIONING DEVICE 514

510

EXTERNAL DEVICE CONNECTION I/F 505 · NETWORK I/F 506 · DISPLAY 507 · OPERATION DEVICE 508 · MEDIUM I/F 509 · SPEAKER 512 · MICROPHONE 513

STORAGE MEDIUM 509m

EP 4 607 470 A1

FIG. 13

STORAGE UNIT

| 5001 | 5002 | 5003 | 5004 |
|---|---|---|---|
| USER/ DEVICE MANAGE-MENT DB | VIRTUAL ROOM MANAGE-MENT DB | THREE-DI-MENSION-AL IMAGE MANAGE-MENT DB | MOVEMENT HISTORY MANAGE-MENT DB |

~5000   COMMUNICATION CONTROL APPARATUS

STORING/READING UNIT ~59
AUTHENTICATION UNIT ~55
PROCESSING UNIT ~54
GENERATION UNIT ~53
RECEPTION UNIT ~52
COMMUNICATION UNIT (ACQUIRING UNIT) ~51   ~5

9

COMMUNICATION NETWORK 100

COMMUNICATION TERMINAL

92~ RECEPTION UNIT (ACQUIRING UNIT)
91~ COMMUNICATION UNIT
99~ STORING/READING UNIT
STORAGE UNIT
9000

DISPLAY CONTROL UNIT ~94
SOUND INPUT/OUT-PUT CONTROL UNIT ~95
GENERATION UNIT ~93
CONNECTION UNIT ~98

3

RELAY DEVICE   31~ COMMUNICATION UNIT
38~ CONNECTION UNIT

10

IMAGE CAPTURING DEVICE

12~ RECEPTION UNIT
13~ DETECTION UNIT
16~ IMAGING UNIT
1000~ STORAGE UNIT

CONNEC-TION UNIT ~18
SOUND COLLEC-TION UNIT ~17
STORING/READ-ING UNIT ~19

7

COMMUNICATION TERMINAL

71~ COMMUNICATION UNIT
78~ CONNECTION UNIT
73~ GENERATION UNIT
72~ RECEPTION UNIT (ACQUIRING UNIT)

DISPLAY CONTROL UNIT ~74
SOUND INPUT/OUTPUT CONTROL UNIT ~75
STORING/READING UNIT ~79
STORAGE UNIT ~7000

# FIG. 14

| DEVICE ID/USER ID | PASSWORD | NAME | USER IMAGE | IP ADDRESS |
|---|---|---|---|---|
| 111d | pw111d | IMAGE CAPTURING DEVICE $\alpha$ | | 1.1.1.1. |
| 112d | pw112d | IMAGE CAPTURING DEVICE $\beta$ | | 1.2.1.1. |
| 100x | pw100x | ORGANIZER X | | 1.1.1.2. |
| 100a | pw100a | PARTICIPANT A | | 1.1.2.1. |
| 100b | pw100b | PARTICIPANT B | | 1.1.2.2. |
| 100c | pw100c | PARTICIPANT C | | 1.1.2.3. |
| ... | ... | ... | ... | ... |

EP 4 607 470 A1

## FIG. 15

| VIRTUAL ROOM ID | VIRTUAL ROOM NAME | DEVICE ID | ORGANIZER ID | PARTICIPANT ID | CONTENT ID | CONTENT URL | FIELD-OF-VIEW INFORMATION URL | THREE-DI-MENSIONAL IMAGE ID |
|---|---|---|---|---|---|---|---|---|
| 111r | CONSTRUCTION SITE Sa1 | 101d | 100x | 100a, 100b | c101 | ··· | ··· | v001 |
| 112r | FACTORY Sa4 | 102d | 100y | 100e, 100f | c102 | ··· | ··· | v002 |
| ··· | ··· | ··· | ··· | ··· | ··· | ··· | ··· | ··· |

EP 4 607 470 A1

# FIG. 16

| THREE-DIMENSIONAL IMAGE ID | MODEL ID | POSITION INFORMATION |
|---|---|---|
| v001 | M0001 | X1,Y1,Z1 |
| | . . . | . . . |
| | . . . | . . . |
| | . . . | . . . |
| | . . . | . . . |
| | . . . | . . . |
| v002 | . . . | . . . |
| . . . | . . . | . . . |
| . . . | . . . | . . . |
| . . . | . . . | . . . |
| . . . | . . . | . . . |
| . . . | . . . | . . . |
| . . . | . . . | . . . |
| . . . | . . . | . . . |
| . . . | . . . | . . . |
| . . . | . . . | . . . |
| . . . | . . . | . . . |
| . . . | . . . | . . . |

# FIG. 17

| (THREE-DIMENSIONAL IMAGE ID: v102) | | | | | | | DATE N |
|---|---|---|---|---|---|---|---|
| (THREE-DIMENSIONAL IMAGE ID: v101) | | | | | | | |
| PART NO. | PART INFORMATION | DIMENSION INFORMATION | COLOR INFORMATION | MATERIAL INFORMATION | POSITION INFORMATION | CONSTRUCTION DATE INFORMATION | |
| 1 | WALL | ... | ... | WOOD | ... | 2023.5. | |
| 2 | WALL | ... | BLACK | ... | ... | 2023.5. | |
| ... | ... | ... | ... | ... | ... | ... | |
| ... | FLOOR | ... | ... | ... | ... | ... | |
| ... | ... | ... | ... | ... | ... | ... | |
| ... | CEILING | ... | ... | ... | ... | ... | |
| ... | ... | ... | ... | ... | ... | ... | |
| ... | WINDOW | ... | ... | GLASS | ... | ... | |
| ... | ... | ... | ... | ... | ... | ... | |
| ... | PIPE | ... | ... | STAINLESS STEEL | ... | 2023.10. | |
| ... | ... | ... | ... | ... | ... | ... | |
| ... | DOOR | ... | ... | ... | ... | ... | |
| ... | ... | ... | ... | ... | ... | ... | |
| ... | ... | ... | ... | ... | ... | ... | |

EP 4 607 470 A1

# FIG. 18

EP 4 607 470 A1

CONTENT ID: c101

| REGIS-TERED | DATE/TIME OF IMAGE AND SOUND CAPTURING | IMAGE CAPTURING POSITION | FIELD-OF-VIEW INFORMATION |
|---|---|---|---|
| | 2023/11/11  10:00:01 | (x1, y1, z1) | $(\phi 1, \theta 1, a1)$ |
| ✓ | 2023/11/11  10:00:02 | (x1, y1, z1) | $(\phi 1, \theta 1, a1)$ |
| | 2023/11/11  10:00:03 | (x1, y1, z1) | $(\phi 1, \theta 1, a1)$ |
| | 2023/11/11  10:00:04 | (x2, y2, z2) | $(\phi 1, \theta 1, a1)$ |
| ✓ | 2023/11/11  10:00:05 | (x2, y2, z2) | $(\phi 1, \theta 1, a1)$ |
| | 2023/11/11  10:00:06 | (x2, y2, z2) | $(\phi 1, \theta 1, a1)$ |
| | 2023/11/11  10:00:07 | (x2, y2, z2) | $(\phi 2, \theta 2, a2)$ |
| ✓ | 2023/11/11  10:00:08 | (x2, y2, z2) | $(\phi 2, \theta 2, a2)$ |
| | 2023/11/11  10:00:09 | (x2, y2, z2) | $(\phi 2, \theta 2, a2)$ |
| | ... | ... | ... |

# FIG. 19

EP 4 607 470 A1

# FIG. 20

COMMUNICATION TERMINAL `7`

COMMUNICATION CONTROL APPARATUS `5`

COMMUNICATION TERMINAL `9a`

COMMUNICATION TERMINAL `9b`

RECEIVE OPERATION FOR STARTING IMAGE AND SOUND RECORDING — S31

INSTRUCTION TO SHARE FIELD-OF-VIEW INFORMATION (VIRTUAL ROOM ID, DEVICE ID) — S32

INSTRUCTION TO START RECORDING (CONTENT URL) AND REQUEST TO UPLOAD FIELD OF VIEW INFORMATION (FIELD-OF-VIEW INFORMATION URL) — S33

REQUEST TO UPLOAD FIELD-OF-VIEW INFORMATION (FIELD OF VIEW INFORMATION URL) — S34

REQUEST TO UPLOAD FIELD OF VIEW INFORMATION (FIELD-OF-VIEW INFORMATION URL) — S35

START RECORDING IMAGE AND SOUND — S36

FIELD-OF-VIEW INFORMATION (USER ID) — S37

FIELD-OF-VIEW INFORMATION (USER ID) — S38

FIELD-OF-VIEW INFORMATION (USER ID) — S39

EP 4 607 470 A1

# FIG. 21

COMMUNICATION TERMINAL — 7
COMMUNICATION CONTROL APPARATUS — 5
COMMUNICATION TERMINAL — 9a
COMMUNICATION TERMINAL — 9b

RECEIVE OPERATION FOR STOPPING IMAGE AND SOUND RECORDING — S51

STOP RECORDING IMAGE AND SOUND — S52

UPLOAD CONTENT DATA — S53

STORE CONTENT DATA IN PREDETERMINED URL — S54

NOTIFICATION OF END OF RECORDING IMAGE AND SOUND (CONTENT URL) — S55

NOTIFICATION OF END OF RECORDING IMAGE AND SOUND (CONTENT URL) — S56

NOTIFICATION OF END OF RECORDING IMAGE AND SOUND (CONTENT URL) — S57

EP 4 607 470 A1

# FIG. 22

COMMUNICATION
CONTROL
APPARATUS  5

COMMUNICATION
TERMINAL  9a

LOG IN (USER ID, PASSWORD)
S71

GENERATE SELECTION
SCREEN  S72

SELECTION SCREEN DATA (CONTENT ID)
S73

SPECIFY CONTENT  S74

REQUEST TO DOWNLOAD CONTENT DATA
(CONTENT ID)
S75

CONTENT DATA
S76

PLAYBACK  S77

# FIG. 23

940

Recorded Data Selection Screen

941

942

943

Construction Site Sa1
2022/10/31 15:00

Construction Site Sa2
2022/11/13 10:00

Construction Site Sa3
2022/11/14 11:00

# FIG. 24

START

C ─────────────────────────────►

S111

SPECIFY PREDETERMINED-AREA IMAGE IN WIDE-FIELD
IMAGE BASED ON FIELD OF VIEW INFORMATION

S112

GENERATE THREE-DIMENSIONAL IMAGE BY ALIGNING
POSITION OF VIRTUAL CAMERA IC2 WITH IMAGE CAPTURING
POSITION OF IMAGE CAPTURING DEVICE 10 AND ALIGNING
VIRTUAL ANGLE OF VIEW OF VIRTUAL CAMERA IC1
WITH VIRTUAL ANGLE OF VIEW OF VIRTUAL CAMERA IC2

S113

REGISTRATION RE-
QUEST OF IMAGE CAPTURING DATE/TIME
OBTAINED?

A ◄── NO

YES

S114

REGISTER IMAGE CAPTURING DATE/TIME REQUESTED
TO REGISTER IN MOVEMENT HISTORY MANAGEMENT DB

B

# FIG. 25

```
                    ┌───┐
                    │ B │
                    └─┬─┘
                      │
                      ▼                              ⌒S115
┌──────────────────────────────────────────────────┐
│ SUPERIMPOSE ICON OF VIRTUAL CAMERA IC1 BASED      │
│ ON IMAGE CAPTURING POSITION AND ANGLE-OF-         │
│ VIEW, ASSOCIATED WITH REGISTERED IMAGE            │
│ CAPTRING DATE/TIME, ON DISPLAY AREA 620           │
└──────────────────────┬───────────────────────────┘
                       │                             ⌒S116
┌──────────────────────▼───────────────────────────┐
│ SUPERIMPOSE CORRESPONDING PREDETERMINED           │
│ AREA AND LINE OF SIGHT (AND MOVEMENT PATH         │
│ IMAGE) ON DISPLAY AREA 620                        │
└──────────────────────┬───────────────────────────┘
  ┌───┐                │
  │ A │────────────────┤
  └───┘                │
                       ▼                             ⌒S117
                 ◇ CHANGE POSITION OR ◇
  ┌───┐   YES     ANGLE-OF-VIEW OF
  │ C │◄────────  VIRTUAL CAMERA IC1?
  └───┘
                       │ NO
                       ▼                             ⌒S118
                 ◇                    ◇      NO
                   END DISPLAY?  ──────────────┐
                 ◇                    ◇        │
                       │ YES                   │
                       ▼                       │
                  ( END )
```

# FIG. 26

THREE-DIMENSIONAL IMAGE — 620

PREDETERMINED-AREA IMAGE — 610

600

609

REGISTER

c1    680

EP 4 607 470 A1

# FIG. 27

EP 4 607 470 A1

# FIG. 28

# FIG. 29

THREE-DIMENSIONAL IMAGE — 620

622 α
623 α
621 α

PREDETERMINED-AREA IMAGE — 610

600
609

REGISTER
680

EP 4 607 470 A1

# FIG. 30

# FIG. 31

EP 4 607 470 A1

FIG. 32

EP 4 607 470 A1

```
                    ( START )

    ┌─────────────────────────────────────────┐
    │ SPECIFY PREDETERMINED-AREA IMAGE IN WIDE-FIELD │──S211
    │ IMAGE BASED ON FIELD OF VIEW INFORMATION       │
    └─────────────────────────────────────────┘
                         │
    ┌─────────────────────────────────────────┐
    │ GENERATE THREE-DIMENSIONAL IMAGE BY ALIGNING   │
    │ POSITION OF VIRTUAL CAMERA IC2 WITH IMAGE CAPTURING │
    │ POSITION OF IMAGE CAPTURING DEVICE 10 AND ALIGNING │──S212
    │ VIRTUAL ANGLE OF VIEW OF VIRTUAL CAMERA IC1    │
    │ WITH VIRTUAL ANGLE OF VIEW OF VIRTUAL CAMERA IC2 │
    └─────────────────────────────────────────┘
                         │
    ┌─────────────────────────────────────────┐
    │ SUPERIMPOSE ICON OF VIRTUAL CAMERA IC1 (AND MOVEMENT │
    │ PATH IMAGE) BASED ON IMAGE CAPTURING POSITION │──S213
    │ AND ANGLE-OF-VIEW, ASSOCIATED WITH REGISTERED │
    │ IMAGE CAPTURING DATE/TIME, ON DISPLAY AREA 620 │
    └─────────────────────────────────────────┘
```

SPECIFY PREDETERMINED-AREA IMAGE IN WIDE-FIELD IMAGE BASED ON FIELD OF VIEW INFORMATION — S211

GENERATE THREE-DIMENSIONAL IMAGE BY ALIGNING POSITION OF VIRTUAL CAMERA IC2 WITH IMAGE CAPTURING POSITION OF IMAGE CAPTURING DEVICE 10 AND ALIGNING VIRTUAL ANGLE OF VIEW OF VIRTUAL CAMERA IC1 WITH VIRTUAL ANGLE OF VIEW OF VIRTUAL CAMERA IC2 — S212

SUPERIMPOSE ICON OF VIRTUAL CAMERA IC1 (AND MOVEMENT PATH IMAGE) BASED ON IMAGE CAPTURING POSITION AND ANGLE-OF-VIEW, ASSOCIATED WITH REGISTERED IMAGE CAPTURING DATE/TIME, ON DISPLAY AREA 620 — S213

(G)

ICON OF VIRTUAL CAMERA IC1 RELATED TO PAST IMAGE CAPTURING POSITION WITHIN PREDETERMINED RANGE FROM CURRENT IMAGE CAPTURING POSITION? — S214    NO

YES

SPECIFY ICON OF VIRTUAL CAMERA IC1 AT PAST IMAGE CAPTURING POSITION CLOSEST TO CURRENT IMAGE CAPTURING POSITION IN PREDETERMINED AREA — S215

SELECT ICON OF VIRTUAL CAMERA IC1? — S216    NO

YES

(F)

# FIG. 33

( F )

↓

S217

CHANGE DISPLAY MODE OF
ICON OF VIRTUAL CAMERA IC1

↓

S218

SUPERIMPOSE CORRESPONDING PREDETERMINED
AREA AND LINE OF SIGHT RELATED TO ICON
OF VIRTUAL CAMERA IC1 ON DISPLAY AREA 620

↓

S219

ADD PAST PREDETERMINED-AREA IMAGE
CORRESPONDING TO ICON OF VIRTUAL CAMERA IC1

↓

S220

DIFFER-
ENCE IN OBJECT
BETWEEN CURRENT PREDETER-
MINED-AREA IMAGE AND PAST
PREDETERMINED-AREA
IMAGE?

NO →

YES ↓

S221

SUPERIMPOSE MARKING IMAGE
TO INDICATE DIFFERENCE

↓

S222

NO ← ( G )    END DISPLAY?

YES ↓

( END )

# FIG. 34

FIG. 35

Europäisches
Patentamt

European
Patent Office

Office européen
des brevets

# EUROPEAN SEARCH REPORT

**Application Number**

EP 25 15 5685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/122280 A1 (ANATER AKRAM [DE]) 21 April 2022 (2022-04-21) * paragraphs [0008], [0035] - [0048], [0054], [0056] * * figure 3 * | 1-14 | INV. G06T19/00 |
| X | US 2012/194336 A1 (THIRUVENGADA HARI [US] ET AL) 2 August 2012 (2012-08-02) * paragraphs [0010], [0013], [0014] - [0018], [0026] * * figures 1-3 * | 1-14 | |
| A | GONÇALO NORONHA ET AL: "Sight surfers", PROCEEDINGS OF THE ACM MULTIMEDIA 2012 WORKSHOP ON GEOTAGGING AND ITS APPLICATIONS IN MULTIMEDIA, GEOMM '12, 1 January 2012 (2012-01-01), page 19, XP055283046, New York, New York, USA DOI: 10.1145/2390790.2390798 ISBN: 978-1-4503-1590-6 * abstract * * section 3.2 * * figure 1 * | 1-14 | |
| X | US 2014/368621 A1 (MICHIYAMA REIJI [JP]) 18 December 2014 (2014-12-18) * paragraphs [0008], [0072] - [0075], [0105], [0106], [0124], [0142], [0146], [0161], [0226], [0228] * * paragraphs [0229], [0295] - [0297] * * figures 9, 34 * | 1-14 | |
| A | US 2016/054793 A1 (KASAHARA SHUNICHI [JP] ET AL) 25 February 2016 (2016-02-25) * paragraphs [0131], [0132], [0138], [0139] * * figures 7, 10B, 10C * | 1-14 | |

**TECHNICAL FIELDS SEARCHED (IPC)**

G06T

The present search report has been drawn up for all claims

| Place of search | Date of completion of the search | Examiner |
|---|---|---|
| Berlin | 10 June 2025 | Kröner, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 5685

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | Publication date |
|---|---|---|---|
| US 2022122280 A1 | 21-04-2022 | CN 114390245 A<br>DE 102020213288 A1<br>GB 2601612 A<br>US 2022122280 A1 | 22-04-2022<br>21-04-2022<br>08-06-2022<br>21-04-2022 |
| US 2012194336 A1 | 02-08-2012 | NONE | |
| US 2014368621 A1 | 18-12-2014 | NONE | |
| US 2016054793 A1 | 25-02-2016 | CN 104104862 A<br>CN 204465706 U<br>EP 2983139 A1<br>JP 6304242 B2<br>JP WO2014162852 A1<br>US 2016054793 A1<br>WO 2014162852 A1 | 15-10-2014<br>08-07-2015<br>10-02-2016<br>04-04-2018<br>16-02-2017<br>25-02-2016<br>09-10-2014 |

EPO FORM P0459

For more details about this annex : see Official Journal of the European Patent Office, No. 12/82

**EP 4 607 470 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023140923 A